# EUROPÄISCHE PATENTSCHRIFT

(11) **EP 1 678 663 B1**
(45) Veröffentlichungstag und Bekanntmachung des Hinweises auf die Patenterteilung: **14.07.2010**
(21) Anmeldenummer: 04765793.7
(22) Anmeldetag: 04.10.2004
(51) Int. Cl.: G06K 13/10, G06K 17/00

(54) **VERFAHREN UND VORRICHTUNG ZUM BEREITSTELLEN VON KARTEN**
METHOD AND DEVICE FOR PROVIDING CARDS
PROCEDE ET DISPOSITIF DE PRODUCTION DE CARTES

(30) Priorität: 27.10.2003 DE 10350221
(43) Veröffentlichungstag der Anmeldung: 12.07.2006
(73) Patentinhaber: BÖWE SYSTEC AG, 86159 Augsburg (DE)
(72) Erfinder: NEFF, Monika, 33102 Paderborn (DE); GAMPERLING, Rudolf, 86316 Friedberg (DE); ESTNER, Stefan, 86199 Augsburg (DE)
(74) Vertreter: Zimmermann, Tankred Klaus
(86) Internationale Anmeldenummer: PCT/EP2004/011059
(87) Internationale Veröffentlichungsnummer: WO 2005/048175

(56) Entgegenhaltungen:
- DE-A1- 10 110 414
- US-A- 5 266 781
- PATENT ABSTRACTS OF JAPAN Bd. 2003, Nr. 12, 5. Dezember 2003 (2003-12-05) & JP 2003 317035 A (KONICA MINOLTA HOLDINGS INC), 7. November 2003 (2003-11-07)

## Beschreibung

Die vorliegende Erfindung bezieht sich auf ein Verfahren und auf eine Vorrichtung zum Bereitstellen von Karten für eine nachfolgende Verarbeitung, und hier insbesondere für ein Verfahren und eine Vorrichtung zum Bereitstellen von Karten für Kartenhandhabungssysteme.

Bekannte Systeme zur Handhabung von Karten arbeiten derart, dass die Karte, z. B. eine dicke Kunststoffkarten von Typ CR-80, mit Kartenträgern automatisch in variabler Stückzahl verbunden werden (appliziert werden). Die mit Kunststoffkarten versehenen Kartenträger werden dann in einer Kuvertierstation in Kuverts verpackt oder werden gefalzt und verschweißt und anschließend einer weiteren Verarbeitung zugeführt. Zusätzlich können den Kartenträgern noch beliebige Beilagen zugeordnet werden, um dann gemeinsam kuvertiert und/oder gefalzt werden.

Im Stand der Technik sind verschiedene Verfahren und Vorrichtungen zum Applizieren von Kunststoffkarten und Kartenträgern bekannt. Aus der DE 195 08 282 C1 und aus der DE 195 33 444 A1 sind Verfahren und Vorrichtungen bekannt, um Kunststoffkarten und Kartenträger unter Verwendung einer Druckauftragsnummer zusammenzuführen und zu verbinden. Nach dem Zusammenführen und Verbinden werden hier die Kunststoffträger kuvertiert und einer weiteren Verarbeitung zugeführt. Aus der DE 197 25 579 A1 ist ein ähnliches Verfahren bekannt, bei dem die Zusammenführung und Verbindung von Kunststoffkarten und Kartenträgern unter Verwendung einer Prüfsumme verifiziert wird. Aus der DE 197 34 483 A1 ist ein Verfahren und eine Vorrichtung zum Zusammenführen und Verbinden von Kunststoffkarten und Kartenträgern unter Verwendung einer Auftragsnummer bekannt, wobei die Verarbeitung Offline erfolgt.

Wiederum ein weiteres Verfahren ist aus der DE 102 50 653 A1 bekannt, bei dem zunächst eine Karte bereitgestellt wird und anschließend Kartendaten von derselben erfasst werden, wobei basierend auf diesen Karten der Kartenträger erstellt wird.

Bei den oben genannten bekannten Verfahren handelt es sich um die Verbindung von Kartenträgern und Karten, wobei die Karten einen Magnetstreifen oder andere durch eine Leseeinrichtung auslesbare Speichereinheit aufweisen, um spezifische Daten der Karte oder spezifische Daten eines Inhabers der Karte zu speichern. Alternativ können auch Karten verbunden werden, welche keine personalisierten Daten enthalten sondern nur allgemeine Informationen bereitstellen.

Bei den oben genannten, im Stand der Technik bekannten Verfahren und Vorrichtungen werden die Karten stets durch Kartenmagazine bereitgestellt, in denen eine Vielzahl von identischen Karten enthalten ist. Verschiedene Ausführungsformen solcher Kartenmagazine sind bekannt, wobei hier unter anderem zu nennen sind, das sogenannte Revolver-Magazin, bei dem eine Vielzahl von Kartenmagazinen, vorzugsweise vier Kartenmagazine, drehbeweglich angeordnet sind, wobei stets aus einem Kartenmagazin die Karten abgezogen werden. Ist ein Kartenmagazin entleert worden, so wird eine Drehung des Revolver-Magazins bewirkt, um ein neues, gefülltes Kartenmagazin bereitzustellen, so dass ohne große Unterbrechung das Gesamtsystem mit Karten versorgt werden kann. Alternativ können die verschiedenen Kartenmagazine parallel zueinander angeordnet werden, wobei die Zuführung der Karten zunächst mit einem ersten Magazin beginnt, und nach dessen Entleerung ein zweites, nachfolgendes Magazin herangezogen wird.

Die von solchen Kartenmagazinen abgezogenen Karten werden dann dem Applizierer zugeführt, wobei hier vorzugsweise eine Lesung der Karten vor dem Applizieren durchgeführt wird. In dem sogenannten Kartenkanal zwischen dem Kartenmagazin und den Applizierer sind vorzugsweise eine Vielzahl von Leseeinrichtungen vorgesehen, um unterschiedliche Kartenarten lesen zu können. Diese Lesevorrichtungen umfassen beispielsweise eine OCR-Leseeinrichtung, z.B. zur Erfassung eines Bar-Codes, eine Chip-Leseeinrichtung zum Auslesen von Speicher- oder Prozessorchips auf den Karten und/oder eine Magnet-Leseeinrichtung zum Auslesen von Magnetstreifen. Zusätzlich können auch andere geeignete Leseeinrichtungen zur Erfassung von Informationen von den Karten vorgesehen sein. Ferner können andere Geräte zum Handhaben der Karten vorgesehen sein, z.B. Wender, die die Karten nach dem Abziehen wenden, so dass eine gewünschte Fläche der Karte eine bestimmte Ausrichtung (z.B. nach oben) hat.

Während des Betriebs erhält sowohl der Applizierer als auch der Kartenkanal in Form einer Datei eine sogenannte Auftrags-Beschreibung oder "Job"-Beschreibung. Hierbei erhält der Applizierer Informationen sowohl über Anzahl der auf den Träger zu applizierenden Karten als auch über deren Position auf dem Träger. Dem Kartenkanal werden unter anderem die Art der Karten, also der Kartentyp, mitgeteilt. Informationen betreffend den Kartentyp umfassen beispielsweise die Angabe ob es sich um eine Dickplastikkarte, eine Dünnplastikkarte, eine geprägte oder eine ungeprägte Plastikkarte handelt. Ferner werden Informationen bereitgestellt, die angeben, ob ein Speichermedium auf der Karte angeordnet ist oder nicht, wobei in erstgenanntem Fall ferner angegeben wird, ob es sich dem Speichermedium um einen Chip, einen kontaktlosen Chip, einen Magnetstreifen, optisch erfassbare Informationen oder ähnliches handelt.

Die so in der Job-Definition angegebenen Daten werden dem Handhabungssystem bereitgestellt, und das Handhabungssystem konfiguriert die entsprechenden Elemente zur Verarbeitung der entsprechenden Karten. In diesem Zusammenhang wird z. B. im Kartenkanal festgelegt, welche der dort angeordneten Leseeinrichtungen für die zu verarbeitenden Karten aktiviert sein müssen und welche deaktiviert sein müssen. Ferner wird festgelegt, welche der zusätzlich vorgesehenen Kartenhandhabungsgeräte (z.B. Wender, etc.) zu aktivieren/deaktivieren sind, um eine erwünschte Handhabung der empfangenen Karte zu gewährleisten. Dies ist wesentlich, da Leseeinrichtungen, die kein Signal erzeugen, ein Fehlersignal ausgeben, so dass das Gesamtsystem anhält. Für den Fall, dass beispielsweise eine Chipkarte verwendet wird, und diese durch einen Magnetstreifenleser geführt wird ergibt sich kein Ausgangssignal des Magnetstreifenlesers, so dass dieser ein Fehlersignal ausgibt, welches zu einer Anhaltung oder Verzögerung des Gesamtbetriebs führt. Um dies zu vermeiden, wird über die in der Job-Definition angegebenen Daten eine Aktivierung/Deaktivierung der entsprechenden Leseeinrichtungen im Kartenkanal bewirkt, um so für die im Kartenmagazin bereitgestellten Karten eine geeignete Verarbeitung sicherzustellen.

Für den Fall, dass alle Magazine im Kartenanleger mit den gleichen Karten bestückt sind, können hier automatisch die verschiedenen Magazine aufeinanderfolgend abgearbeitet werden. Die Verarbeitung von Karten unterschiedlichen Typs ist nur mit sehr hohem Aufwand möglich und reduziert somit die Flexibilität des Systems.

Ein weiterer Nachteil besteht darin, dass die Verarbeitung von Aufträgen, bei denen Karten unterschiedlichen Typs verarbeitet werden, nur sehr aufwendig und für den Fall, dass die Anzahl der Karten sich ändert, gar nicht möglich ist. Als Beispiel sei der Fall angenommen, dass auf einem Kartenträger drei Karten zu applizieren sind, wobei eine erste Karte einen Chip aufweist, eine zweite Karte einen Magnetstreifen aufweist und eine dritte Karte gar keine Speichermedien aufweist, z. B. eine Kundenkarte mit allgemeinen Kundeninformationen betreffend Servicetelephonnummern oder ähnliches. In diesem Fall ist es erforderlich, in der Job-Definition dem Handhabungsgerät mitzuteilen, dass für jeden Träger zuerst eine Chipkarte, dann eine Magnetstreifenkarte und dann eine Karte ohne Speichermedium bereitgestellt wird, wobei die Karten dann auch in der entsprechenden Reihenfolge in dem Kartenmagazin bereitgestellt werden müssen. Auch hier ist es wieder erforderlich, dem System vorab eine genaue Informationen hinsichtlich der Reihenfolge der unterschiedlichen Kartentypen bereitzustellen, um so eine ordnungsgemäße Ansteuerung der einzelnen Komponenten, beispielsweise der verschiedenen Leseeinrichtungen in dem Kartenkanal, zu ermöglichen. Auch diese Vorgehensweise ist sehr unflexibel.

Auch der Fall, in dem unterschiedliche Anzahlen von Karten für unterschiedliche Träger bereitgestellt werden müssen, ist in solchen bekannten Ansätzen nur sehr schwer handzuhaben, da hier ebenso wie im gerade beschriebenen Fall, die entsprechenden Karten in der entsprechenden Reihenfolge im Kartenmagazin angeordnet werden müssen, und hier zusätzlich zur Job-Definition jeder einzelne Job genau zu definieren ist, um die entsprechende Ansteuerung der Kartenleseelemente in dem Kartenkanal zu ermöglichen.

Auch für Fälle, in denen es möglich ist, dass der Kartenanleger eine Mehrzahl, d. h. mehr als zwei, Karten parallel anlegt, muss in der Job-Definition die entsprechenden Informationen für jeden Träger bereitgestellt werden, so dass das System die entsprechende Aktivierung/Deaktivierung der Kartenleseeinrichtung in dem Kartenkanal bewerkstelligen kann.

Somit bleibt zusammenfassend festzustellen, dass der Nachteil der im Stand der Technik bekannten Ansätze darin besteht, dass hier stets Kartenanleger verwendet werden, die lediglich dazu geeignet sind, Karten an das Handhabungssystem bereitzustellen, jedoch keinerlei Flexibilität im Zusammenhang mit der Bereitstellung unterschiedlicher Karten für das Gesamtsystem bereitstellen, da hier stets die erforderliche Job-Definition dem Gesamtsystem, und hier insbesondere die Informationen betreffend den Kartentyp, vorab bereitgestellt werden müssen, um einen ordnungsgemäßen Betrieb sicherzustellen.

Die DE 101 10 414 A1 beschreibt ein Kartenpersonalisierungssystem umfassend mindestens ein erstes und ein zweites Kartenvorratsmagazin zur Zuführung von zu personalisierenden Karten und mindestens ein erstes und ein zweites Kartenablagemagazin zum Ablegen von Karten nach ihrer Personalisierung, eine oder mehrere dem ersten Kartenvorratsmagazin und dem ersten Kartenablagemagazin funktional fest zugeordnete erste Bearbeitungsstationen zur Personalisierung der Karten aus dem ersten Kartenvorratsmagazin und eine oder mehrere dem zweiten Kartenvorratsmagazin und dem zweiten Kartenablagemagazin funktional fest zugeordnete zweite Bearbeitungsstationen zur Bearbeitung der Karten aus dem zweiten Kartenvorratsmagazin (30), und eine gemeinsame Transporteinrichtung zum Transportieren der Karten von dem ersten Kartenvorratsmagazin (20) zu den ersten Bearbeitungsstationen bis zum ersten Kartenablagemagazin und von dem zweiten Kartenvorratsmagazin zu den zweiten Bearbeitungsstationen bis zum zweiten Kartenablagemagazin.

Ausgehend von diesem Stand der Technik liegt der vorliegenden Erfindung die Aufgabe zugrunde, einen verbesserten Kartenanleger zu schaffen, der eine erhöhte Flexibilität des Gesamtsystems ermöglicht.

Diese Aufgabe wird durch ein Verfahren nach Anspruch 1 und durch eine Vorrichtung nach Anspruch 11 gelöst.

Vorzugsweise sind in einem Kartenmagazin Karten gleichen Kartentyps angeordnet, und die Informationen betreffend den Kartentyp sind dem Kartenmagazin zugeordnet. Beim Abzug einer Karte aus einem Kartenmagazin werden dann die dem Kartenmagazin zugeordneten Informationen weitergegeben. Die Informationen betreffend den Kartentyp umfassen vorzugsweise Informationen betreffend das Kartenmaterial, betreffend die Kartenprägung und/oder ein Kartenspeichermedium. Vorzugsweise umfassen die Informationen betreffend das Kartenspeichermedium Informationen betreffend das Vorhandensein des Speichermediums und betreffend den Typ des Speichermediums. Dies ermöglicht bei der nachfolgenden Verarbeitung eine geeignete Aktivierung der Kartenleseeinrichtungen abhängig von dem angezeigten Speichermediumtyp sowie die Aktivierung weiterer Handhabungseinrichtungen (z.B. Wender) abhängig von dem angezeigten Kartentyp.

Gemäß der Erfindung werden Informationen oder Daten empfangen, die den Kartentyp der abzuziehenden Karte angeben, wobei diese vorzugsweise von einem späteren Kartenträger erhalten wird. In diesem Zusammenhang ist vorgesehen, dass die Karte in der nachfolgenden Verarbeitung mit einem Träger verbunden wird, der der nachfolgenden Verarbeitung bereitgestellt wird und Informationen trägt, die den Kartentyp der Karte anzeigt, die mit dem Träger zu verbinden ist., wobei hier erfindungsgemäß vor dem Abziehen der Karte die Informationen von dem Träger gelesen werden, um zu erfassen, welche der Karten aus der Mehrzahl der Kartenmagazine abzuziehen ist. Diese Informationen umfassen ferner vorzugsweise eine Anzahl der bereitzustellenden Karten.

Gemäß einem Ausführungsbeispiel der vorliegenden Erfindung wird zunächst eine Karte abgezogen, und vor dem Schritt (b) werden Informationen von dieser Karte gelesen. Basierend auf den so gelesenen Informationen bzw. Daten wird auf eine Datenbank zugegriffen, die weitere Informationen ausgibt, basierend auf welchen ein Abziehen und Weitergeben weiterer Karten durchgeführt wird. Vorzugsweise werden die aus der Datenbank erhaltenen Informationen auch dazu verwendet, einen Träger zu erzeugen, wobei anschließend die Karte und die weiteren Karten mit dem Träger verbunden werden.

Gemäß einem weiteren Ausführungsbeispiel der vorliegenden Erfindung können in jedem der Mehrzahl der Kartenmagazine Karten einer ersten Gruppe und Karten einer zweiten Gruppe angeordnet sein, wobei diese Gruppen in jedem der Kartenmagazine nur durch eine Trennkarte getrennt sind. Die Karten der ersten Gruppe werden aus den Magazinen abgezogen und weitergegeben, bis alle Trennkarten in allen Magazinen erkannt wurden.

Erfindungsgemäß wird somit ein Kartenanleger geschaffen, der Karten, vorzugsweise aus bis zu vier Kartenmagazinen, in sequentieller, paralleler oder selektiver Reihenfolge abzieht und diese einem Stollentransport, der dem Kartenkanal zugeordnet ist, zuführt. Vorzugsweise umfasst jedes Kartenmagazin nur eine Kartenart, jedoch können die verschiedenen Magazine unterschiedliche Kartenarten aufnehmen. Vorzugsweise ist die Karte eine Kunststoffkarte, wie sie heute z. B. bei Kreditkarten oder ähnlichem eingesetzt wird. Die vorliegende Erfindung ist jedoch nicht auf solche Kunststoffkarten beschränkt. Tatsächlich können beliebige Karten gehandhabt werden, wobei "Karte" im Sinne der vorliegenden Erfindung nicht nur Kunststoffkarte bedeutet, sondern auch andere Karten oder kartenähnliche Elemente umfasst. Ferner umfasst der Begriff "Karte" im Sinne der vorliegenden Erfindung auch Datenträger, wie beispielsweise Mini-Disks oder Mini-CDs, SIM-Karten, etc. Bei den Karten handelt es sich beispielsweise um Kreditkarten, Krankenversicherungskarten, Führerscheine und Personalausweise, Treuekarten, etc.

Bevorzugte Weiterbildungen der vorliegenden Erfindung sind in den Unteransprüchen definiert.

Nachfolgend werden anhand der beiliegenden Zeichnungen bevorzugte Ausführungsbeispiele der vorliegenden Erfindung näher erläutert. Es zeigen:
- Fig. 1: ein Flussdiagramm des erfindungsgemäßen Ver- fahrens gemäß einem Ausführungsbeispiel;
- Fig. 2: ein Blockdiagramm der erfindungsgemäßen Vor- richtung gemäß einem Ausführungsbeispiel in einem Kartensystem;
- Fig. 3: ein Flussdiagramm, das den sequentiellen Ab- zug von Karten aus einer Mehrzahl von Maga- zinen beschreibt;
- Fig. 4: Flussdiagramme, die den parallelen Abzug von Karten aus einer Mehrzahl von Magazinen be- schreiben, wobei Fig. 4A den parallelen Ab- zug ohne Toggle und Fig. 4B den parallelen Abzug mit Toggle beschreiben;
- Fig. 5A-5D: Beispiele für einen parallelen Abzug mit Toggle;
- Fig. 6: ein erstes bevorzugtes Ausführungsbeispiel der vorliegenden Erfindung für den Offline- Betrieb, wobei Fig. 6A ein Flussdiagramm ge- mäß einer ersten Ausführung des Offline- Betriebs, Fig. 6B ein schematisches Ablauf- diagramm, Fig. 6C ein Blockdiagramm der Vor- richtung in einem Kartensystem und Fig. 6D ein Blockdiagramm gemäß einer zweiten Aus- führung des Offline-Betriebs zeigen;
- Fig. 7: ein zweites bevorzugtes Ausführungsbeispiel der vorliegenden Erfindung für den Online- Betrieb, wobei Fig. 7A ein Flussdiagramm ge- mäß einer ersten Ausführung des Online- Betriebs, Fig. 7B und 7C ein Flussdiagramm gemäß einer zweiten Ausführung des Online- Betriebs, Fig. 7D ein schematisches Ablauf- diagramm und Fig. 7E ein Blockdiagramm der Vorrichtung in einem Kartensystem zeigen;
- Fig. 8: ein drittes bevorzugtes Ausführungsbeispiel der vorliegenden Erfindung zur sicheren Ver- arbeitung kleiner Aufträge, wobei Fig. 8A ein Flussdiagramm und Fig. 8B eine schemati- sche Darstellung der Kartenmagazine zeigen.

Bei der nachfolgenden Beschreibung bevorzugter Ausführungsbeispiele werden in den einzelnen Figuren diejenigen Elemente, die gleiche oder ähnliche Wirkung haben, mit gleichen oder ähnlichen Bezugszeichen versehen. Ferner sei an dieser Stelle darauf hingewiesen, dass in der nachfolgenden Beschreibung der Begriff "Mehrzahl" verwendet wird, in der Bedeutung, dass zumindest zwei oder mehr der angegebenen Elemente vorgesehen sind.

Wie oben erwähnt, bezieht sich die vorliegende Erfindung auf ein Verfahren und auf eine Vorrichtung zum Bereitstellen von Karten für eine Verarbeitung, z. B. Kreditkarten oder ähnliches. Die vorliegende Erfindung ist jedoch nicht auf Karten oder Kunststoffkarten beschränkt sondern es können beliebige Karten gehandhabt werden, wobei "Karte" die oben erwähnte Bedeutung im Sinne der vorliegenden Erfindung hat.

Vorzugsweise findet die vorliegende Erfindung Anwendung auf Karten, beispielsweise geprägte CR-80 Karten, ungeprägte CR-80 Karten, oder allgemein Kunststoffkarten mit einer Dicke zwischen 0,3 bis 1,5 mm.

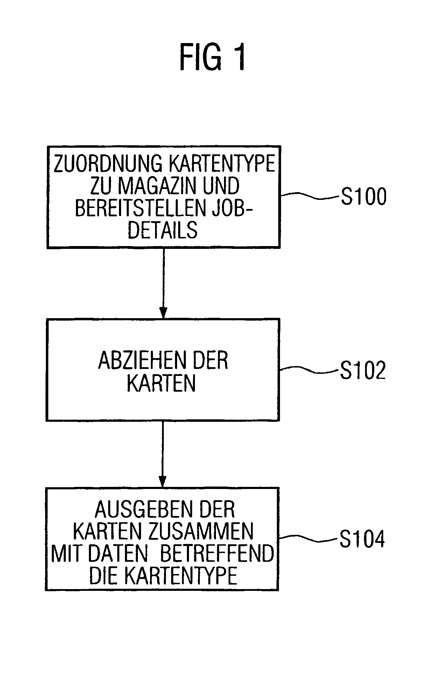

Gemäß der vorliegenden Erfindung wird, wie in Fig. 1 gezeigt ist, in einem ersten Schritt S100, oder einem Vorbereitungsschritt, eine sogenannte Job-Definition dem Gesamtsystem bereitgestellt, wobei hier zumindest die in den verschiedenen Magazinen enthaltenen Kartenarten angegeben werden, so dass eine entsprechende Zuordnung der Kartenart zu einem entsprechenden Magazin existiert. Die Kartenart umfasst Informationen hinsichtlich des Kartenmaterials, z. B. ob es sich um eine Dickplastikkarte oder eine Dünnplastikkarte handelt, ob eine Prägung vorgesehen ist oder nicht, und welche Art von Speichermedium vorgesehen ist (Chipkarte, kontaktlose Chipkarte, Magnetstreifen, JIS2, OCRlesbare Informationen, etc.)

Sobald diese Informationen dem Kartenanleger bereitgestellt sind, startet das erfindungsgemäße Verfahren, indem im Schritt S102 eine Karte oder mehrere Karten aus den Magazinen abgezogen werden und im Schritt S104 für eine nachfolgende Bearbeitung anderen Abschnitten des Systems bereitgestellt werden, wobei hier zusammen mit der Karte die jeweils die Karte betreffenden Daten über den Kartentyp weitergegeben werden.

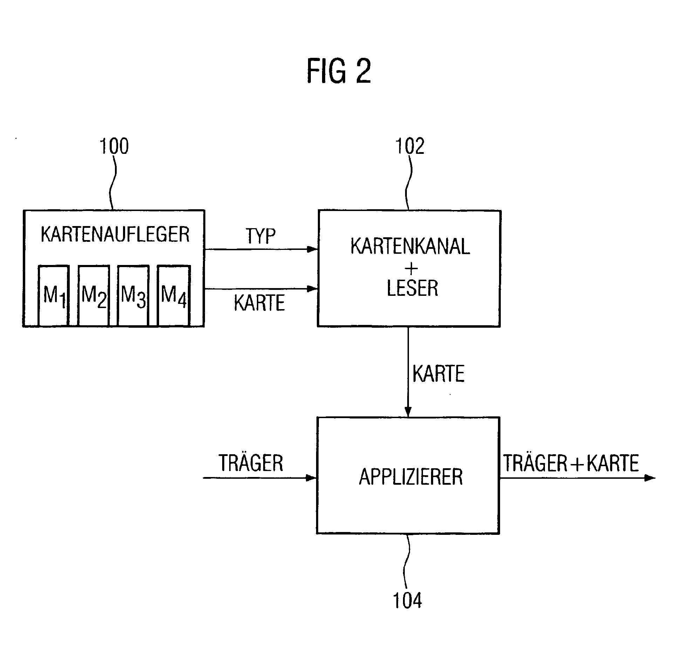

In Fig. 2 ist ein Blockdiagramm gezeigt, welches den erfindungsgemäßen Kartenanleger 100 in einem Gesamtssystem zum Applizieren von Karten und Trägern zeigt. Der Kartenanleger 100 ist wirksam mit einem Kartenkanal 102 verbunden, der wiederum wirksam mit einem Applizierer 104 verbunden ist. Der Kartenleger 100 umfasst eine Mehrzahl von Kartenmagazinen M₁ bis M₄, bei dem dargestellten Ausführungsbeispiel sind es vier Kartenmagazine, wobei jedoch eine beliebige Anzahl von Kartenmagazinen vorgesehen sein kann, sofern zumindest zwei Kartenmagazine angeordnet sind. Wie durch die Pfeile zwischen dem Kartenanleger 100 und dem Kartenkanal 102 angezeigt ist, wird von dem Kartenanleger 100 eine Karte an den Kartenkanal übertragen zusammen mit Informationen betreffend den Kartentyp. Diese Informationen betreffend den Kartentyp, die vom Kartenanleger an den Kartenkanal 102 weitergegeben werden, ermöglichen es, dass der Kartenkanal 102 sich konfiguriert, um die in dem Kartenkanal angeordneten Leseeinrichtungen entsprechend zu aktivieren/deaktivieren. Abhängig vom Kartentyp, wird dann beispielsweise ein Chipkartenleser und ein Magnetkartenleser aktiviert, wenn die nächste zu verarbeitende Karte in dem Kartenkanal sowohl einen Kartenchip als auch einen Magnetstreifen aufweist. Eine gegebenenfalls vorgesehene OCR-Leseeinrichtung zum Erfassen von Text oder eines Barcodes würde in diesem Fall deaktiviert. Handelt es sich bei der Karte um eine Karte ohne Speichermedien, so würde dies durch die entsprechende Typinformation angezeigt und der Kartenkanal 102 würde sich entsprechend konfigurieren, also alle Leseeinrichtungen deaktivieren. Diese Deaktivierung der nicht verwendeten Leseeinrichtungen ist erforderlich, um eine Unterbrechung des Betriebsablaufes zu vermeiden, da für den Fall, dass an einer Lesestation, die aktiv, kein Signal erfasst wird, ein Fehler bei der Kartenzuführung vermutet und das System zur Behebung des angeblich vorhandenen Fehlers angehalten wird. Um dies bei dem flexiblen Abzug von Karten aus den Kartenmagazinen M₁ bis M₄ erfindungsgemäß zu vermeiden werden zusammen mit den jeweiligen Karten Kartentypinformationen an den Kartenkanal übersandt, so dass dieser die entsprechende Aktivierung/Deaktivierung durchführen kann.

Der Vorteil dieser Vorgehensweise liegt auf der Hand, da es nun nicht mehr erforderlich ist, für große Aufträge im vorab bereits alle möglichen Reihenfolgen der verschiedenen aufeinanderfolgenden Arbeitsdurchgänge festzulegen, sondern nur noch anzugeben, welche Karten aus welchen Magazinen mit einem Träger zu verbinden sind, unabhängig davon welche Art der Karten enthalten ist. Die erforderlichen Informationen zur Ansteuerung des Kartenkanals werden von dem Kartenanleger zusammen mit der jeweiligen Karte an den Kartenkanal übertragen. Der Vorteil dieser Vorgehensweise liegt darin, dass nun auf einfache Art und Weise eine erhöhte Flexibilität bei der Bereitstellung der Karten zur Applizierung auf einem Kartenträger erreicht werden kann, da nun nur noch die einzelnen Karten in die Magazine geladen werden müssen und die entsprechenden Informationen hinsichtlich der Kartenart, die in jedem der Magazine enthalten ist, dem Gesamtsystem bereitgestellt werden müssen. Abhängig von den Gegebenheiten wird dann basierend auf der Gesamtsteuerung der Aufträge die erwünschte Anzahl der Karten abgezogen, auch eine sich verändernde Anzahl der Karten ist ohne weiteres möglich, und die erforderliche Ansteuerung des Kartenkanals und der dort angeordneten Leseeinrichtungen erfolgt auf der Grundlage der mit jeder Karte übergebenen Kartentypinformation.

Wie in Fig. 2 ferner zu erkennen ist, wird die durch den Kartenkanal 102 verarbeitete Karte an den Applizierer 104 ausgegeben, in dem dieselbe mit einem dem Applizierer 104 bereitgestellten Träger verbunden wird, wobei hier auch eine Mehrzahl, also zwei oder mehr Karten, mit dem Träger verbunden werden können. Der Applizierer gibt dann den Träger mit den darauf angeordneten Karten aus. Vorzugsweise erfolgt vor dem Verbinden von Karten und Kartenträger eine Überprüfung ob Kartenträger und Karte tatsächlich übereinstimmen, was z. B. durch eine Lesung der Karte sowie eine Lesung von Daten von dem Kartenträger und ein Abgleich dieser Informationen bewerkstelligt wird. Beispiele für solche Vorgehensweisen sind in den oben, in der Beschreibungseinleitung angegebenen deutschen Patentanmeldungen der Anmelderin zu entnehmen.

Die Lesung der einzelnen Karten im Kartenkanal 102 dient, wie erwähnt, der Überprüfung ob die miteinander zu verbindenden Karten und der Kartenträger tatsächlich zusammenpassen. Ferner dient die Lesung im Kartenkanal 102 dazu, sicherzustellen dass auch tatsächlich die Karte vorliegt, die der Reihenfolge der Abarbeitung, wie sie extern bereitgestellt wird, entspricht.

Vorzugsweise umfasst der Kartenanleger 100 bis zu vier Kartenmagazine M₁ bis M₄, wobei die Füllmenge pro Magazin von der Kartendicke und einer möglichen Kartenprägung abhängig ist. Jedes Magazin kann beispielsweise bis zu 500 ungeprägter Karten mit einer Dicke von 0,8 mm aufnehmen. Die Karten können mit der Oberseite nach oben (Face Up) oder mit der Oberseite nach unten (Face Down) in den Magazinen liegen, wobei die Festlegung für alle Magazine pro Auftrag oder Job nicht identisch sein muss. Befindet sich die Aufnahme des jeweiligen Magazins in Grundstellung, kann ein Magazin eingeschoben werden und der Kartenstapel wird beispielsweise durch eine Spindel, die motorisch über einen Schrittmotor angetrieben wird, von unten nach oben bewegt. Erreicht die oberste Karte eine definierte Grundstellung, ist das Magazin betriebsbereit. Vorzugsweise lässt sich ein Magazin, das sich in der gerade beschriebenen Grundstellung befindet, nicht entfernen.

Der Kartenanleger 100 umfasst eine der Anzahl der Kartenmagazine entsprechende Anzahl von Vakuumsaugern, die, wenn die Anlage betriebsbereit ist, dazu dienen, die oberste Karte aus dem Kartenmagazin abzuziehen und in einen Stollentransport zu überführen. Vorzugsweise ist hier eine Rückhaltevorrichtung vorgesehen, die über dem Magazin angeordnet ist, um eine Vereinzelung der einzelnen Karten sicherzustellen.

Gemäß einem bevorzugten Ausführungsbeispiel umfasst der Kartenanleger 100 einen Sensor, vorzugsweise einen kapazitiven Sensor, zur Abfrage, ob eine abgezogene Karte ihre Sollposition in dem Stollentransport erreicht hat. Wird bestätigt, dass die Karte ihre Sollposition erreicht hat, wird der Stollentransport einmal getaktet, also um eine vorbestimmte Entfernung weiterbewegt. Sollte die Abfrage negativ ausfallen, wird ein Fehler angezeigt.

Gemäß einem bevorzugten Ausführungsbeispiel der vorliegenden Erfindung kann der Kartenanlegen 100 in drei Betriebsarten unterschieden werden, die nachfolgend noch näher erläutert werden.

In der ersten Betriebsart, die als Job-Definition bezeichnet wird, wird die Abzugsart sowie die Kartenart je Magazin in einer Jobdatei fest hinterlegt, die dem Kartenhandhabungssystem bereitgestellt wird.

In einer zweiten Betriebsart, der Offline-Betriebsart (Abruf über den Kartenträger), werden über codierte Informationen auf einem Kartenträger die gewünschten Karten in Art und Stückzahl selektiv pro Kartenträger aus den Magazinen abgerufen.

In der dritten Betriebsart, dem Online-Betrieb (Abruf über eine Karte), wird eine Kartenart/ein Magazin als sogenannte führende Karte definiert. Nachdem eine der führenden Karten abgezogen wurde und die codierten Informationen ausgelesen wurden, werden die dazugehörigen Karten dieser Gruppe abgezogen. Die entsprechenden Informationen werden aus einer Kundendatenbank, beispielsweise mittels einer Identifizierungsreferenznummer, ermittelt.

Für die oben beschriebenen Betriebsarten werden die nachfolgend genannten Parameter dem Kartenhandhabungssystem für jeden Auftrag im Rahmen der Job-Datei bereitgestellt. Die Parameter umfassen die Betriebsart, die Sequenz der Magazine, den Magazinplatz, die Zuführreihenfolge sowie die Kartenart. Bei der Definition der Betriebsart wird zunächst angegeben, ob die Karten sequentiell, parallel mit Togglebetrieb oder parallel ohne Togglebetrieb aus den Magazinen abgezogen werden. Für die Betriebsart "Job-Definition" sind diese drei Angaben ausreichend. Für die andern zwei Betriebsarten Offline und Online wird entsprechend in der Betriebsart noch der Offline-Betrieb oder Online-Betrieb angegeben.

Die Sequenz der Magazine wird aus einer bereitgestellten Tabelle, auf die nachfolgend noch näher eingegangen wird, ausgewählt.

Die Zuführreihenfolge gibt an, ob die Karten mit der Oberseite nach oben oder nach unten zugeführt werden. Die Kartenart gibt die Informationen bezüglich Kartenmaterial, Kartenprägung, Kartenspeichermedium an.

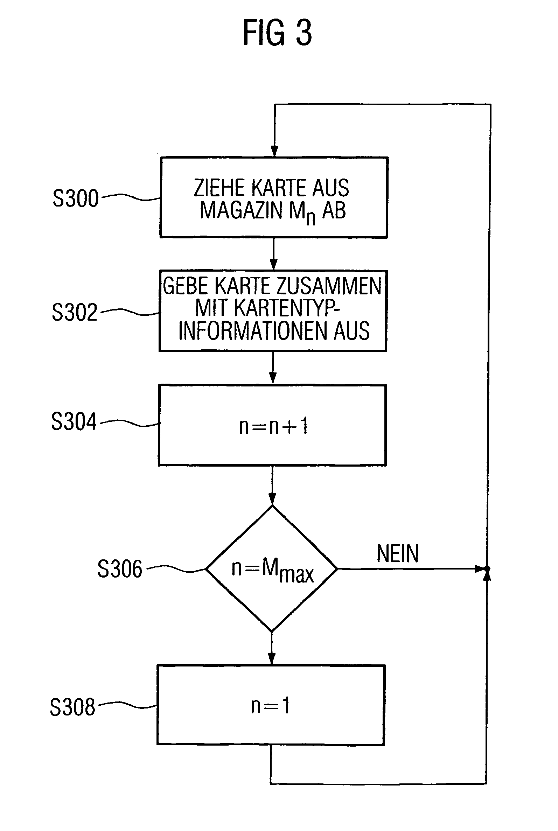

Anhand der Fig. 3 wird nachfolgend der sequentielle Abzug näher erläutert, wobei hier im Schritt S300 eine Karte aus einem Magazin Mₙ abgezogen wird. n bezeichnet hierbei eines der vorgesehenen Magazine, wobei beispielsweise gilt n = 1, 2, 3 oder 4. Im Schritt S302 wird die abgezogene Karte zusammen mit der Kartentypinformation, beispielsweise an den Kartenkanal 102 (siehe Fig. 2), ausgegeben. Anschließend wird im Schritt S304 auf das nächste Magazin gewechselt, indem der Index n um 1 erhöht wird. Bevor eine erneute Karte abgezogen wird, wird im Schritt S306 überprüft, ob n der maximalen Anzahl von vorhandenen Magazinen (beispielsweise n = 4; Mₘₐₓ = 4) entspricht. Ist dies nicht der Fall, so geht das Verfahren zum Schritt S300 weiter, und die nächste Karte wird aus einem nachfolgenden Magazin abgezogen. Wird im Schritt S306 festgestellt, dass die Karte aus dem letzten Magazin abgezogen wurde, so wird im Schritt S308 n auf 1 zurückgestellt, also mit dem Abzug aus dem ersten Magazin wieder begonnen, und das Verfahren geht zurück zu Schritt S300.

Auf die anhand der Fig. 3 beschriebenen Art und Weise lassen sich verschiedene sequentielle Abzugsreihenfolgen erreichen, z. B.:
M₁(m)→M₂(n)→M₃(O)→M₄(p)→M₁(m)→M₂(n)→M₃(O)→M₄(p) ....
M₁(m)→M₂(n)→M₃(o)→M₁(m)→M₂(n)→M₃(o)→M₁(m)→M₂(n) ....
M₂(n)→M₃(o)→M₄(p)→M₂(n)→M₃(o)→M₄(p)→M₂(n)→M₃(o) ....
M₁(m)→M₃(o)→M₄(p)→M₁(m)→M₃(o)→M₄(p)→M₁(m)→M₃(o) ....
M₁(m)→M₄(p)→M₁(m)→M₄(p)→M₁(m)→M₄(p)→M₁(m)→M₄(p) ....
In der obigen Aufstellung geben m, n, o und p die Anzahl der Karten an, die aus dem zugeordneten Magazin abgezogen werden, bevor aus einem anderen Magazin Karten abgezogen werden, wobei gilt: m, n, o ,p = 0, 1, 2, ...

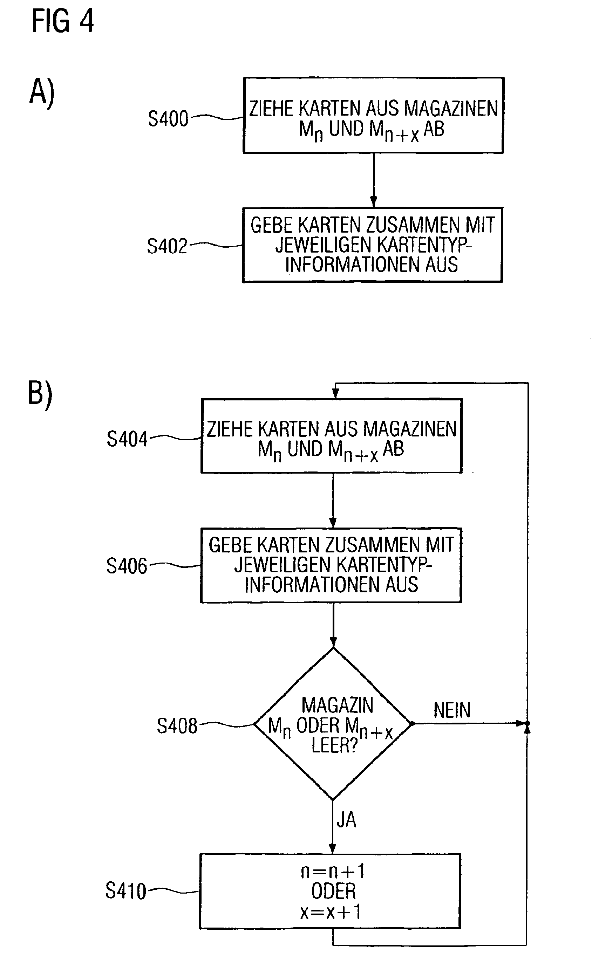

Anhand der Fig. 4 wird nachfolgend der parallele Abzug aus einer Mehrzahl von Kartenanlegermagazinen näher erläutert. Fig. 4A zeigt ein Flussdiagramm, welches den parallelen Abzug ohne Toggle-Betrieb zeigt. Im Schritt S400 werden gleichzeitig aus den Magazinen Mₙ und Mₙ₊ₓ die Karten abgezogen, beispielsweise aus den Magazinen 1 und 2, wobei dann gilt n = 1 und x = 1. Anschließend werden die Karten zusammen mit den jeweiligen Kartentypinformationen beispielsweise an den Kartenanleger 102, ausgegeben, wie dies im Schritt S402 gezeigt ist.

Neben dem parallelen Abzugsbetrieb ohne Toggle-Betrieb existiert der anhand der Fig. 4B beschriebene parallele Abzugsbetrieb mit Toggle-Betrieb. Diese Betriebsart ist vorteilhaft, da hierdurch eine Kapazitätserhöhung erreichbar ist, indem in mehreren Magazinen Karten vom gleichen Typ angeordnet sind. Dies bietet insbesondere den Vorteil, dass einzelne Magazine nachgefüllt werden können, während das System läuft - eine Unterbrechung wird also vermieden. Ferner ist diese Betriebsart vorteilhaft, wenn ein erster Kartentyp öfter verwendet wird, als ein zweiter Kartentyp, wenn also beispielsweise zwei Karten des ersten Typs auf einen Kartenträger und nur eine Karte eines zweiten Kartentyps auf den Kartenträger aufgebracht werden soll, oder wenn beim Betrieb nicht auf jeden der Träger eine zweite Karte aufzubringen ist, jedoch stets eine erste Karte. In diesem Fall kann vorgesehen sein, dass der Kartenanleger, der beispielsweise vier Magazine umfasst, Karten des ersten Typs im ersten bis dritten Magazin enthält, und Karten des zweiten Typs nur im vierten Magazin enthält. In dieser Funktionsweise wird dann für den Fall, dass das erste Magazin leer ist, auf das zweite Magazin übergewechselt und von diesem die Karten des ersten Kartentyps abgezogen. Alternativ können auch bei vier Magazinen jeweils zwei Magazine mit gleichen Kartentypen besetzt sein, so dass für den Fall, dass ein Magazin leer ist, auf das nächste Magazin mit gleichen Kartentypen gewechselt wird, was die Möglichkeit eröffnet, während des Betriebs der Anlage die Karten ohne Unterbrechung nachzufüllen.

Fig. 4B zeigt ein Flussdiagramm, welches den Parallelabzug mit Toggle-Betrieb verdeutlicht. Im Schritt S404 werden parallel Karten aus den Magazinen, ähnlich wie im Schritt S400, abgezogen, wobei hier als Beispiel auch angenommen sei, dass n = 1 und x = 1 ist. Anschließend werden im Schritt S406 die Karten zusammen mit den zugeordneten Kartentypinformationen ausgegeben und im Schritt S408 wird überprüft, ob eines der Magazine leer ist. Wenn dies nicht der Fall ist, geht das Verfahren zum Schritt S404 zurück. Wird im Schritt S408 festgestellt, dass eines der Magazine leer ist oder auch beide Magazine leer sind, so geht das Verfahren zum Schritt S410, in dem der Wechsel auf ein nachfolgendes Magazin vorbereitet wird, indem der Zähler n um 1 erhöht wird, oder der Zähler x um 1 erhöht wird, so dass die oben angegebene Funktionalität des Wechselns von einem ersten Magazin auf ein zweites Magazin einstellt. Das Verfahren geht anschließend zum Schritt S404 zurück.

Die nachfolgende Aufstellung zeigt Beispiele für den parallelen Abzug mit Toggle-Betrieb aus einer Mehrzahl von bis zu vier Magazinen.
**M₁(m)→M₂(n)**→M₃(o)→M₄(p)→**M₁(m)→M₂(n)**→M₃(o)→M₄(p) ....
**M₁(m)→M₂(n)→M₃**(o)→M₄(p)**→M₁(m)→M₂(n)→M₃(o)**→M₄(p) ....
**M₁(m)→M₂(n**)→M₃(o)→**M₁(m)→M₂(n)**→M₃(o)→**M₁(m)→M₂(n)** ....
In der obigen Aufstellung geben n, m, o und p die Anzahl der Karten an, die aus dem zugeordneten Magazin abgezogen werden, bevor aus einem anderen Magazin Karten abgezogen werden, wobei gilt: m, n, o ,p = 0, 1, 2, ...

In der oben genannten Tabelle bezeichnen die fettgedruckten Buchstaben diejenigen Magazine, zwischen denen gewechselt wird. Für den ersten Fall bedeutet dies, dass in den Magazinen M₁ und M₂ gleiche Kartentypen angeordnet sind, und in den Magazinen M₃ und M₄ unterschiedliche Kartentypen. Der parallele Abzug erfolgt derart, dass zunächst aus dem Magazin M₁, M₃ und M₄ Karten abgezogen werden, und für den Fall, dass das Magazin M₁ leer ist, wird auf das Magazin M₂ gewechselt.

Die oben beschriebene hohe Flexibilisierung bei der Verarbeitung unterschiedlichster Kartenarten macht den erfindungsgemäßen Ansatz erforderlich, jeder Karte ihre Beschreibung zumindest hinsichtlich ihres Kartentyps, zur Aktivierung bzw. Deaktivierung der in nachfolgenden Verarbeitungseinheiten existierenden Elemente mitzugeben, um so Fehler im Betrieb des Gesamtsystems zu vermeiden, wie sie beispielsweise bei der versuchten Lesung einer Magnetstreifenkarte ohne Chip in der Chipleseeinrichtung hervorgerufen würden.

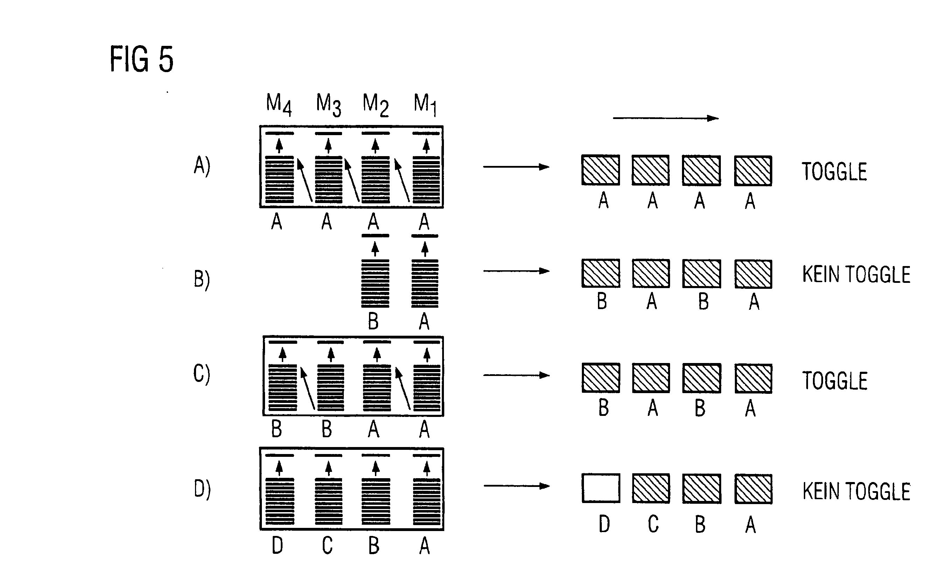

Die Fig. 5 zeigt verschiedene Beispiele für den parallelen Abzug von Karten aus bis zu vier Kartenmagazinen eines Kartenanlegers. Fig. 5A zeigt den Sonderfall, dass in allen vier Magazinen M₁ bis M₄ gleiche Karten abgelegt sind, wobei Fig. 5A den Toggle-Betrieb zeigt, nämlich zunächst nur den Abzug der Karten aus dem Magazin M₁, und erst anschließend daran, dass das Magazin M₁ leer ist, wird auf das Magazin M₂ gewechselt. Die sich ergebende Kartenreihenfolge oder Kartensequenz nach dem Abzug ist im rechten Bereich der Fig. 5 gezeigt.

Fig. 5B zeigt den parallelen Abzug aus zwei Magazinen M₁ M₂ von unterschiedlichen Karten A und B. Die Kartensequenz nach dem Abzug ist erneut in der rechten Hälfte der Fig. 5 zu sehen.

Fig. 5C zeigt den parallelen Abzug im Toggle-Betrieb, bei dem in dem Magazin M₁ und M₂ jeweils Karten des Typs A angeordnet sind, und in dem Magazin M₃ und M₄ jeweils Karten des Typs B angeordnet sind. Hier werden zunächst gleichzeitig Karten aus den Magazinen M₁ und M₃ abgezogen, und für den Fall, dass das Magazin M₁ bzw. M₃ leer ist, wird auf das Magazin M₂ bzw. M₄ gewechselt. Die Kartensequenz nach dem Abzug ist in Fig. 5C in der rechten Hälfte der Figur zu erkennen.

Fig. 5D zeigt den parallelen Abzug von Karten aus den vier Magazinen M₁ bis M₄, wobei jedes Magazin einen unterschiedlichen Kartentyp A bis D enthält. Die sich ergebende Kartensequenz nach dem Abzug ist wiederum im rechten Bereich der Fig. 5 zu erkennen.

Erfindungsgemäß können somit auf einfache Art und Weise unterschiedliche Kartendaten in einem Auftrag verarbeitet werden, wobei die zur Aktivierung von nachfolgenden Verarbeitungsmodulen, z. B. den Leseeinrichtungen in dem Kartenkanal, erforderlichen Informationen den Karten über die Definition der Kartenart mitgegeben werden kann.

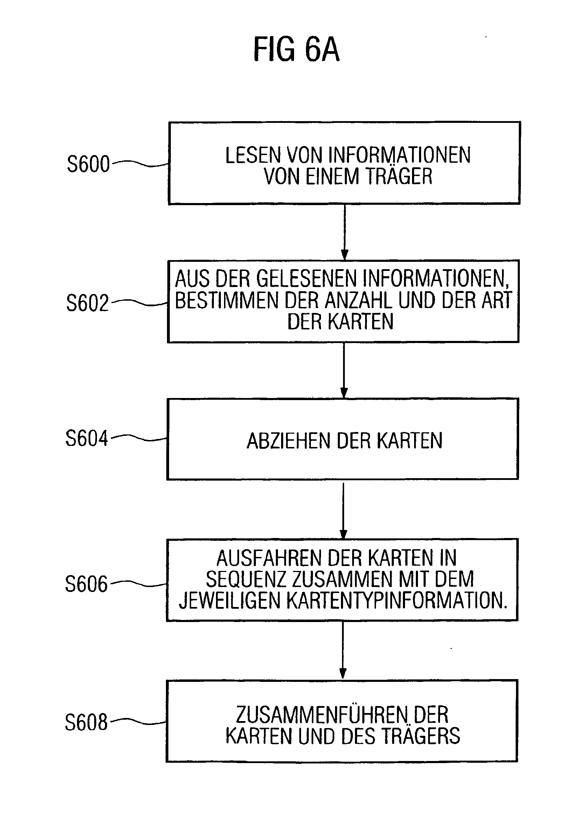

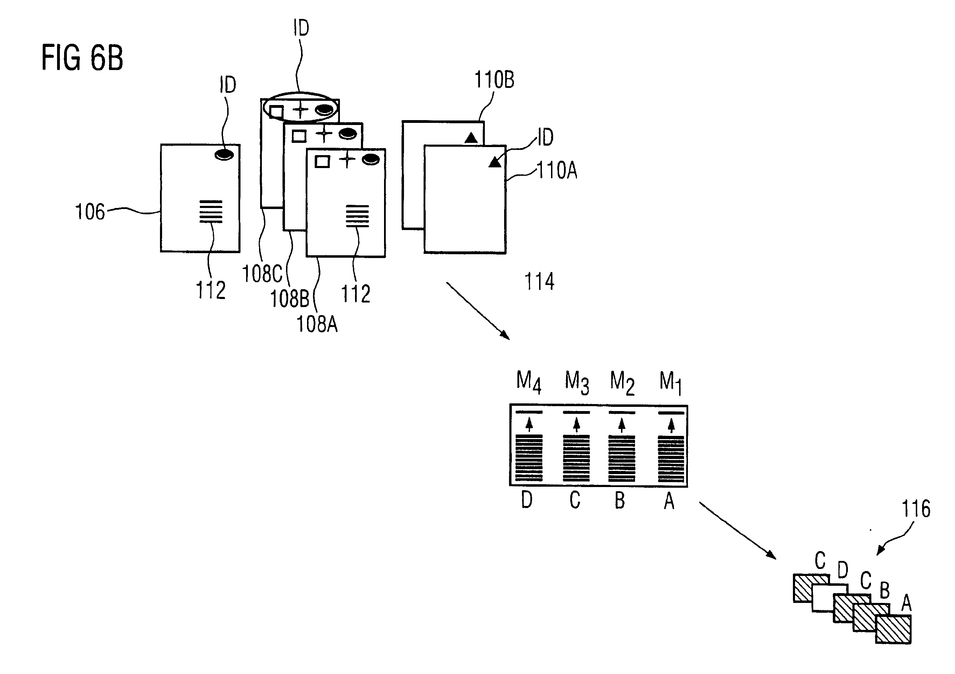

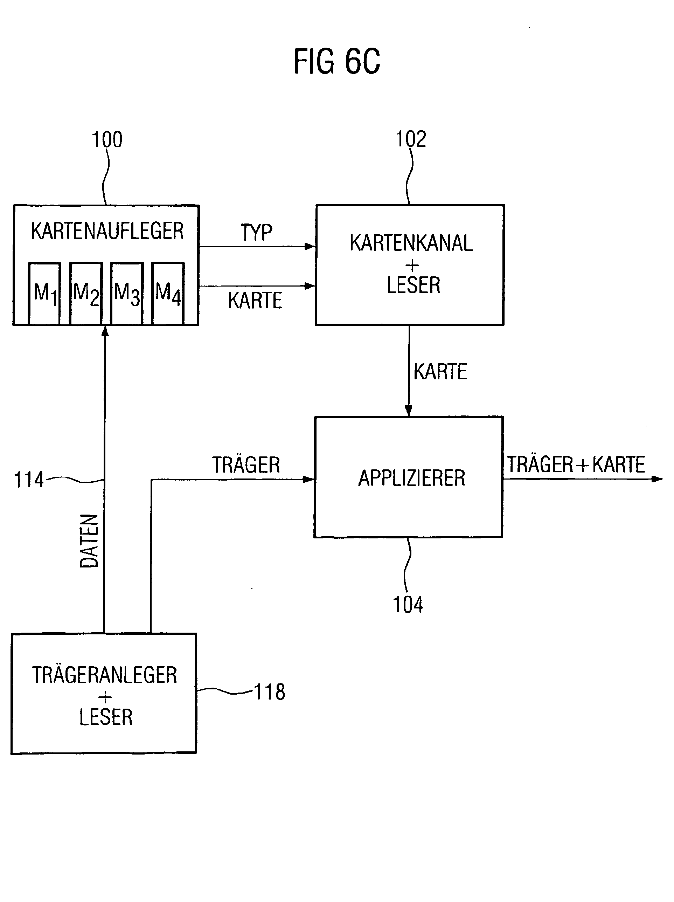

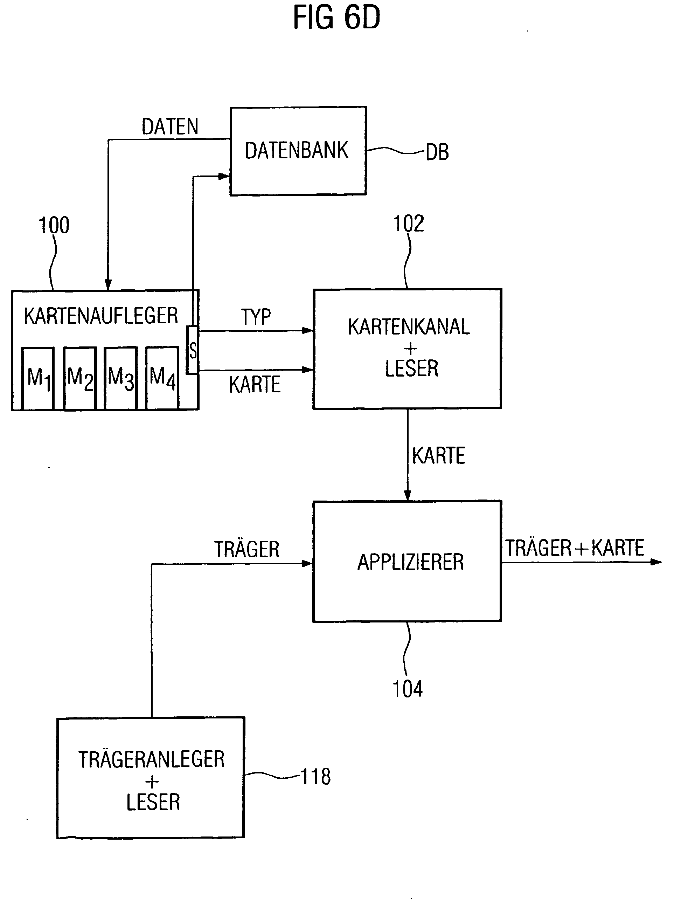

Anhand der Fig. 6 wird nachfolgend ein erstes bevorzugtes Ausführungsbeispiel der vorliegenden Erfindung beschrieben, nämlich der sogenannte Offline-Betrieb des erfindungsgemäßen Kartenanlegers. Fig. 6A zeigt ein Flussdiagramm des Offline-Betriebs gemäß einer ersten Ausführung. Hier wird im Schritt S600 von einem Träger, der dem Handhabungssystem zugeführt wird, eine Informationen gelesen, z. B. eine Trägeridentifikation, die Informationen über die Kartenart und die Anzahl der Karten enthält, die mit dem entsprechenden Träger zu verbinden sind. Im Schritt S602 wird basierend auf diesen gelesenen Informationen die Anzahl und die Art der aufzubringenden Karten bestimmt, und im Schritt S604 werden die Karten entweder sequentiell oder parallel, wie dies oben beschrieben wurde, abgezogen und im Schritt S606 zusammen mit den zugehörigen Kartentypinformationen dem Kartenkanal bereitgestellt. Abschließend erfolgt im Schritt S608 das Applizieren bzw. Zusammenführen und Verbinden der Karten und des Trägers. Diese Ausführung wird auch als Offline-Betrieb mit führendem Träger bezeichnet.

Fig. 6B zeigt ein schematisches Ablaufdiagramm, bei dem eine Mehrzahl von Kartenträgern 106 gezeigt sind, wobei eine Mehrzahl von Kartenträgern 106, 108a-108c und 110a und 110b vorgesehen sind. Die Kartenträger 106-110 umfassen jeweils Identifikationsmarkierungen ID wobei die Träger 106 und 108 bereits personalisiert sind, wie dies durch das Bezugszeichen 112, welches ein Adressfeld oder ähnliches bezeichnet, angedeutet ist. Die Identifikationsinformationen ID werden von einem Träger gelesen, und an den Kartenanleger übergeben, wie dies durch den Pfeil 114 schematisch dargestellt ist. Abhängig von den gelesenen Informationen werden die Magazine M₁ bis M₄ angesteuert, um Karten aus den Magazinenabzuziehen, so dass sich die bei 116 in Fig. 6B gezeigte Kartensequenz ergibt. Wie zu erkennen ist kann durch die verschiedenen Identifikationsmarkierungen ID die Sequenz der Karten flexibel gesteuert werden, so dass beispielsweise die Karten A-D und anschließend erneut die Karte C vorgesehen wird.

Um Unterschiede bei der Verarbeitung zwischen Träger und Karte auszugleichen, kann bei dieser Anwendung entweder ein Kartenpuffer oder ein Blattpuffer vorgesehen sein, um sicherzustellen dass die erforderlichen Karten und Träger gleichzeitig am Applizierer ankommen.

Fig. 6C zeigt ein Blockdiagramm des Systems gemäß diesem Ausführungsbeispiel, das auf dem anhand der Fig. 2 beschriebenen Blockdiagramm basiert und entsprechend erweitert wurde. Das System umfasst ferner eine Einrichtung 118, die die personalisierten Trägerbereitstellt, z.B. einen Trägeranleger oder den Ausgang einer Schneidemaschine. Dieser Anleger 118 umfasst ferner eine Leseeinrichtung, um die Identifikationsmarkierung ID auf den Trägern zu lesen, und die entsprechenden Daten über die Datenleitung 114 in dem Kartenanleger bereitzustellen. Der Kartenanleger 100 zieht dann auf die oben beschriebene Art und Weise die Karten ab und überträgt diese zusammen mit der Typinformation an den Kartenkanal, von wo aus diese, auf die oben beschriebene Art und Weise, dem Applizierer zugeführt werden und dort mit dem bereitgestellten Träger verbunden werden, so dass am Ausgang des Applizierers der Träger mit darauf angeordneter Karte/Karten ausgegeben wird.

Fig. 6D zeigt ein Blockdiagramm des Offline-Betriebs gemäß einer zweiten Ausführung, die als Offline-Betrieb mit führender Karte bezeichnet wird. Hierbei wird eine z.B. durch Auswahl des Magazins M1 als "führende Karte" definierte Karte abgezogen und mittels eines Sensors S gelesen. Basierend auf den gelesenen Daten oder Informationen wird auf eine Datenbank DB zugegriffen, um basierend auf den aus der Datenbank DB erhaltenen Karteninformationen weitere Karten für den Auftrag abzuziehen. Die führende Karte und die weiteren Karten werden dann zusammen mit den jeweiligen Kartentypinformationen dem Kartenkanal bereitgestellt. Parallel zur und unabhängig von der Bereitstellung der Karten erfolgt die Bereitstellung des Kartenträgers über die oben beschriebene Einrichtung 118. Hierbei wird über die Leseeinrichtung die Identifikationsmarkierung des Trägers gelesen, um den Träger zu identifizieren. Wie beschrieben erfolgt daraufhin die Zusammenführung und Verbindung der bereitgestellten Karten und des Trägers im Applizierer, wobei die Zusammengehörigkeit von Karte bzw. Karten und Träger im Applizierer überprüft wird.

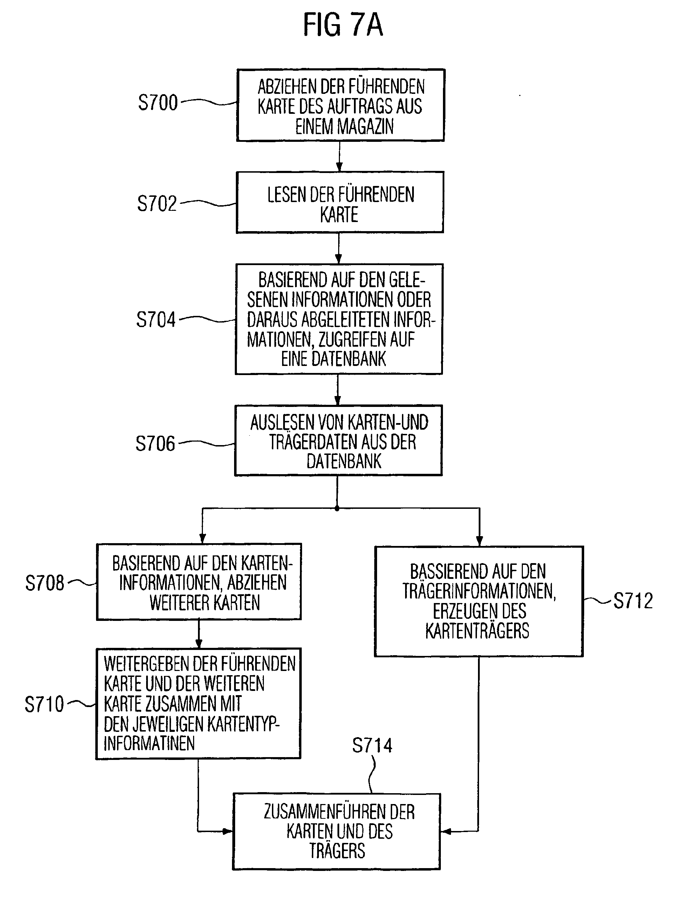

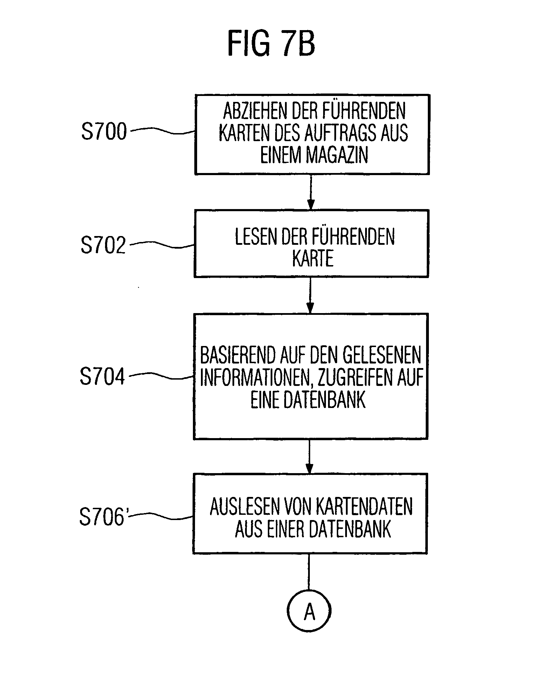

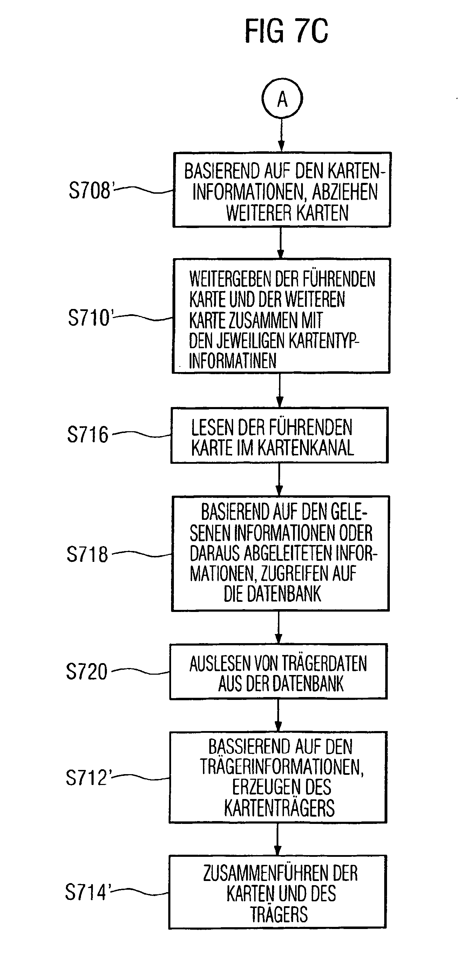

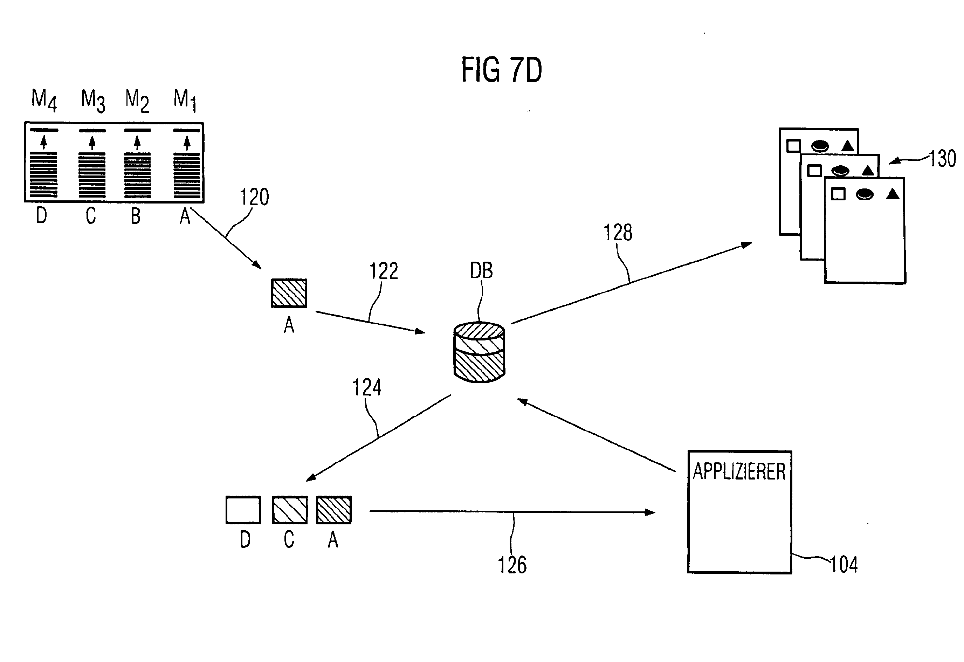

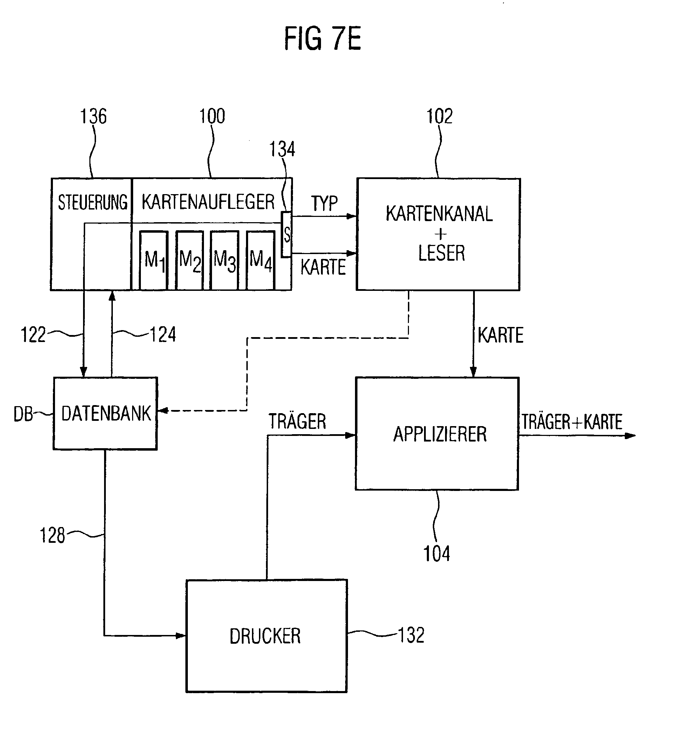

Anhand der Fig. 7 wird nachfolgend ein wiederum weiteres bevorzugtes Ausführungsbeispiel der vorliegenden Erfindung erläutert, nämlich der Online-Betrieb. Fig. 7A zeigt ein Flussdiagramm des Online-Betriebs gemäß einer ersten Ausführung. Hier ist es erforderlich, eine Kartenart als "führende Karte" zu definieren. Diese Definition erfolgt beispielsweise durch Auswahl des ersten Magazins M₁. Gemäß dieser Betriebsart wird, wie in Fig. 7A im Schritt S700 gezeigt ist, zunächst die führende Karte des Auftrags aus dem entsprechenden Magazin, z. B. M₁, abgezogen. Im Schritt S702 erfolgt nun eine Lesung der führenden Karte, und basierend auf den gelesenen Daten oder Informationen wird im Schritt S704 auf eine Datenbank zugegriffen, wobei im Schritt S706 Karten- und Trägerdaten aus der Datenbank ausgelesen werden. Im Schritt S708 werden dann basierend auf den Karteninformationen weitere Karten abgezogen, und im Schritt S710 werden die führende Karte und die weiteren Karten zusammen mit den jeweiligen Kartentypinformationen ausgegeben. Ferner wird basierend auf den aus der Datenbank erhaltenen Trägerinformationen im Schritt S712 ein Kartenträger erzeugt, und im Schritt S714 werden Träger und Karten zusammengeführt.

Fig. 7B und 7C zeigen ein Flussdiagram des Online-Betriebs gemäß einer zweiten Ausführung. Diese Ausführung unterscheidet sich in den Schritten S700 bis S704 nicht von dem anhand der Fig. 7A beschriebenen Ausführungsbeispiel. Anders als dort werden jedoch im Schritt S706' nur Kartendaten oder Karteninformationen gelesen. Anschließend werden die ggf. weiteren Karten im Schritt S708' abgezogen und zusammen mit der führenden Karte im S710' ausgegeben (ähnlich wie in Fig. 7A). Anders als in Fig. 7A erfolgt jedoch keine Erzeugung des Trägers. Vielmehr wird die führende Karte, z.B. in dem Kartenkanal, im Schritt S716 erneut gelesen, basierend auf den gelesenen Informationen wird im Schritt S718 auf die Datenbank erneut zugegriffen, und im Schritt S720 werden die Trägerdaten aus der Datenbank ausgelesen. Im Schritt S712' wird dann der Träger basierend auf den im Schritt S720 erhaltenen Daten erzeugt. Im Schritt S714' werden Karten und Träger verbunden.

Diese Ausführung wird dann gewählt, wenn eine zusätzliche Absicherung der ersten Lesung im Kartenanleger gewünscht ist. Dieser Ansatz ist bei einer Barcode-Lesung, einer Chip-Lesung oder einer Magnetstreifenlesung im Kartenanleger nicht unbedingt erforderlich, da bei dieser Lesung die Daten mit hoher Sicherheit erhalten werden. Allerdings kann die zweite Ausführung auch bei solchen Karten herangezogen werden.

Fig. 7D zeigt den gerade beschriebenen Ablauf nochmals schematisch, wobei zunächst die führende Karte A aus dem Magazin abgezogen wird, wie dies durch den Pfeil 120 gezeigt ist. Diese Karte wird dann direkt nach dem Abzug gelesen, wie dies durch den Pfeil 122 verdeutlicht ist. Basierend auf den von der Datenbank DB erhaltenen Daten, wie dies durch den Pfeil 124 verdeutlicht ist, werden die weiteren Karten CD aus den Magazinen abgezogen, und dem Applizierer 104 zusammen mit der Karte A bereitgestellt, wie dies durch den Pfeil 126 verdeutlicht ist. Ferner wird, wie durch den Pfeil 128 verdeutlicht ist, basierend auf den Informationen aus der Datenbank DB die Träger 130 erzeugt, beispielsweise durch Druck der personalisierten Kartenträger. Im Applizierer werden dann die ausgewählten Daten und die Online-erzeugten personalisierten Kartenträger zusammengeführt.

Fig. 7E zeigt das Blockdiagramm aus Fig. 2 in erweiterter Form. Wie zu erkennen ist, umfasst das System für eine Realisierung der in Fig. 7A beschriebenen Vorgehensweise ferner die Datenbank DB sowie einen Drucker 132. Der Kartenanleger 100 ist ferner mit einem Sensor 134 versehen, vorzugsweise am Ausgang des Anlegers 100, und umfasst ferner eine Steuerung 136. Im oben beschriebenen Online-Betrieb wird, wie erwähnt, mittels des Sensors 134 die aus dem Magazin M₁ abgezogene Karte mittels des Sensors 134 gelesen, um eine Identifikationsmarkierung zu erhalten, beispielsweise eine Identifikationsnummer oder ähnliches. Mittels dieser Identifikationsnummer wird über die Steuerung 136 und die Leitung 122 auf die Datenbank DB zugegriffen, um die für diesen Auftrag erforderlichen Informationen hinsichtlich Kartenanzahl und Träger zu erhalten. Die Informationen bezüglich Kartenanzahl und Kartentypen werden über die Leitung 124 an die Steuerung 136 des Kartenanlegers 100 zurückgegeben, um so eine entsprechende Ansteuerung des Kartenanlegers zum Abzug der weiteren erwünschten Karten durchzuführen. Ferner werden über die Leitung 126 die Trägerdaten an den Drucker 132 bereitgestellt, um den personalisierten Kartenträger zu erzeugen, der dann in dem Applizierer 104 später zusammen mit den erforderlichen Karten bereitgestellt wird, um, auf herkömmliche Art und Weise, einen Kartenträger mit darauf applizierten Karten zu erhalten.

Ferner ist in Fig. 7E die Implementierung der anhand der Fig. 7B und 7C beschriebenen Ausführung gezeigt. Durch die Leitung (gestrichelte Linie) zwischen dem Kartenkanal 102 und der Datenbank DB werden die von der führenden Karte gelesenen Daten an die Datenbank für einen Zugriff auf dieselbe weitergeleitet.

Beim Beginn der Verarbeitung des Auftrags wird, wie oben erwähnt, aus dem ersten Magazin M₁ eine Karte abgezogen und über den Stollentransport an einen Zwischentransport übergeben. Dort kann beispielsweise die Lesung, z. B. eine kontaktlose Chiplesung, vorgesehen sein. Nach Identifizierung der Karten wird mittels einer Identifizierungsreferenznummer aus einer Kunden-Datenbank ausgelesen, welche anderen Karten zu dieser Gruppe gehören und diese werden abgezogen. Erreicht die nächste freie Stollenposition das erste Magazin, so wiederholt sich der gerade beschriebene Prozess.

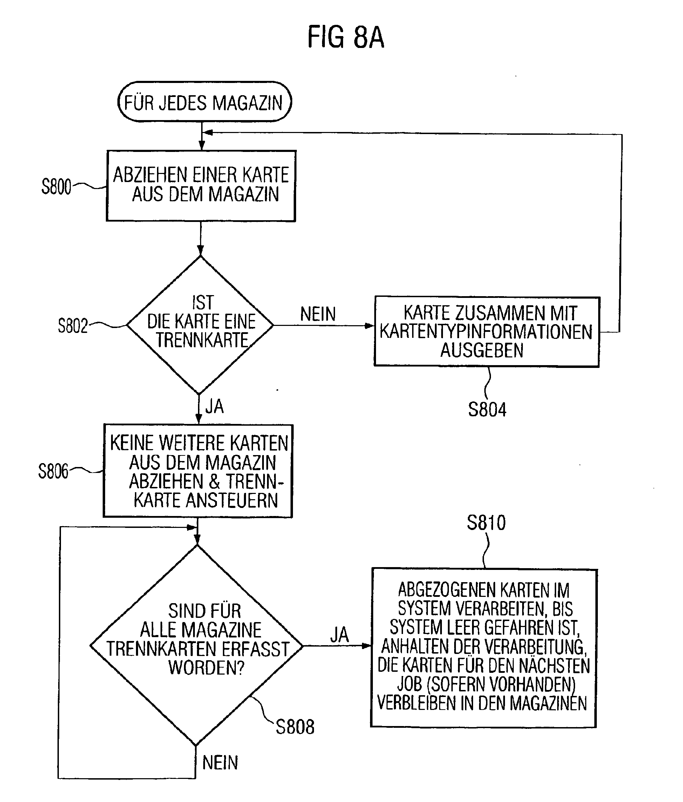

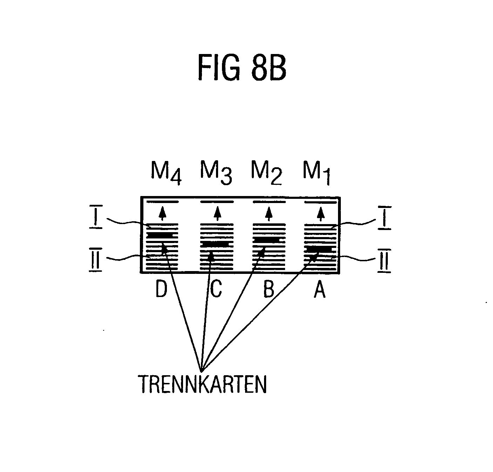

Anhand der Fig. 8 wird nachfolgend ein drittes, bevorzugtes Ausführungsbeispiel der vorliegenden Erfindung beschrieben, nämlich die sogenannte Jobtrennung mit Trennkarten. Diese Betriebsart ermöglicht eine sichere und effiziente Verarbeitung von kleinen Aufträgen. In diesem Fall werden die Karten bzw. die Kartenarten für jeden Auftrag in den Magazinen gespeichert, und für jeden Auftrag durch Trennkarten voneinander getrennt. Diese Trennkarten haben z.B. Leiterschleifen, die induktiv erfassbar sind. Beim Einzug einer Karte von einem Magazin in den Stollentransport wird eine Überprüfung durchgeführt, ob eine Trennkarte erfasst wurde oder nicht. Diese Überprüfung erfolgt vorzugsweise durch einen induktiven Sensor. Erkennt der Kartenanleger die Trennkarte, so wird keine Karte mehr aus dem entsprechenden Magazin abgezogen, und die Trennkarten werden vorzugsweise bis zum Kartenkanal transportiert und dort ausgesteuert. Wurden alle Trennkarten für die in einem Job definierten Kartenarten erfasst, wird der Befehl "Kartenkanal leerfahren" ausgegeben, so dass die sich im Kartenkanal noch befindlichen Karten auf herkömmliche Art und Weise weiterverarbeitet werden, aber vor dem Verarbeiten des nachfolgenden Auftrags sichergestellt ist, dass der Kartenkanal leer ist. Vorzugsweise werden auch die übrigen Elemente des Kartenhandhabungssystems, also der Applizierer und alle nachgeschalteten Elemente leergefahren, so dass sich vor dem Beginn des nächsten Auftrags keine dem vorherigen Auftrag zugehörigen Elemente noch in dem Handhabungssystem befinden.

Fig. 8A zeigt ein Flussdiagramm, das den Ablauf bei dieser Betriebsart näher erläutert. Im Schritt S800 wird, wie üblich, eine Karte aus einem Magazin abgezogen, und im Schritt S802 wird überprüft ob es sich hierbei um eine Trennkarte handelt. Ist dies nicht der Fall, so wird im Schritt S804 die Karte zusammen mit den Kartentypinformationen an den Kartenkanal ausgegeben. Das Verfahren kehrt dann zum Schritt S800 zurück. Wird im Schritt S802 festgestellt, dass die Karte eine Trennkarte ist, so wird im Schritt S806 ein weiteres Abziehen von Karten aus dem betroffenen Magazin unterbunden. Die Schritte S800 bis S804 werden parallel für jedes Magazin beim Abzug einer Karte aus demselben durchgeführt. Ferner wird im Schritt S808 überprüft, ob die Trennkarten für alle Kartenarten erfasst wurden. Wenn dies der Fall ist, wird im Schritt S810 die abschließende Verarbeitung der noch existierenden Karten in dem System durchgeführt, und anschließend das System leergefahren und/oder angehalten. Die Karten (sofern vorhanden) für den nächsten Auftrag verbleiben in den Magazinen.

Fig. 8B zeigt die Anordnung der Trennkarten in den Magazinen M₁ bis M₄ gemäß diesem Ausführungsbeispiel. Wie zu erkennen ist, sind die Trennkarten in den verschiedenen Magazinen an unterschiedlichen Positionen angeordnet, und trennen die zum Auftrag I gehörenden Karten von den zum Auftrag II gehörten Karten.

Obwohl die bevorzugten Ausführungsbeispiele der vorliegenden Erfindung oben anhand von Ausführungsbeispielen beschrieben wurden, bei denen bestimmte Informationen betreffend die Kartentypen genannt waren, ist es für den Fachmann offensichtlich, das auch andere Informationen betreffend die verwendeten Karten zusätzlich oder alternativ verwendet werden können.

## Patentansprüche

1. Verfahren zum Bereitstellen von Karten (A, B, C, D) für eine Verarbeitung, wobei die Karten (A, B, C, D) in einer Mehrzahl von Kartenmagazinen (M₁, M₂, M₃, M₄) angeordnet sind und aus der Mehrzahl der Kartenmagazine (M₁ bis M₄) abziehbar sind, wobei den Karten (A-D) Informationen betreffend den Kartentyp zugeordnet sind, mit folgenden Schritten:
(a) Empfangen (S600) von Informationen, die den Kartentyp der abzuziehenden Karte (A-D) angeben
(b) Abziehen (S604) einer Karte (A-D) aus zumindest einem Kartenmagazin (M₁ bis M₄); und
(c) Ausgeben der Karte (A-D) für die nachfolgende Verarbeitung zusammen mit der der Karte (A-D) zugeordneten Informationen betreffend den Kartentyp, um eine Steuerung der nachfolgenden Verarbeitung basierend auf der weitergegebenen Informationen zu ermöglichen,
wobei in einem Kartenmagazin (M₁-M₄) Karten (A-D) eines bekannten Kartentyps angeordnet sind und die Informationen betreffend den Kartentyp dem Kartenmagazin (M₁-M₄) zugeordnet sind, wobei bei einem Abzug einer Karte (A-D) aus einem Kartenmagazin (M₁-M₄) im Schritt (a) die dem Kartenmagazin (M₁-M₄) zugeordneten Informationen im Schritt (b) weitergegeben werden,
**dadurch gekennzeichnet, dass**
die Karte in der nachfolgenden Verarbeitung mit einem Träger (106, 108a, 108b, 110a, 110b, 110c) verbunden wird, der eine Trägeridentifikation (ID) trägt, die vor dem Abziehen der Karte (A-D) von dem Träger (106, 108a, 108b, 110a, 110b, 110c) gelesen wird und Informationen über den Kartentyp der Karte (A-D) enthält, die mit dem Träger zu verbinden ist.

2. Verfahren nach Anspruch 1, bei dem die Informationen betreffend den Kartentyp Informationen über das Kartenmaterial, eine Kartenprägung und/oder ein Speichermedium auf der Karte umfassen.

3. Verfahren nach Anspruch 2, bei dem die Informationen betreffend den Kartentyp Informationen über ein Speichermedium auf der Karte umfassen, die das Vorhandensein eines Speichermediums und den Speichermediumtyp anzeigen, so dass bei der nachfolgenden Verarbeitung abhängig von dem angezeigten Speichermediumtyp eine geeignete Kartenleseeinrichtung aktivierbar ist.

4. Verfahren nach einem der Ansprüche 1 bis 3, bei dem die Schritte (a) und (b) sequentiell für die Kartenmagazine (M₁-M₄) durchgeführt werden.

5. Verfahren nach einem der Ansprüche 1 bis 4, bei dem in einer ersten Anzahl von Kartenmagazinen (M₁; M₁, M₂) Karten (A) eines ersten Kartentyps angeordnet sind und in einer zweiten Anzahl von Kartenmagazinen (M₂; M₂, M₄) Karten eines zweiten Kartentyps (B) angeordnet sind, wobei im Schritt (a) eine Karte (A) aus zumindest einem Kartenmagazin der ersten Anzahl und eine Karte (B) aus zumindest einem Kartenmagazin der zweiten Anzahl parallel abgezogen werden.

6. Verfahren nach einem der Ansprüche 1 bis 5, bei dem die Informationen ferner eine Anzahl der bereitzustellenden Karten (A-D) umfasst.

7. Verfahren nach einem der Ansprüche 1 bis 6, bei dem eine im Schritt (a) abgezogene Karte vor dem Schritt (b) gelesen wird (S702), wobei das Verfahren ferner folgende Schritte aufweist:
basierend auf den von der Karte (A-D) gelesenen Informationen, Zugreifen (S704) auf eine Datenbank (DB); und
basierend auf den Informationen aus der Datenbank (DB), Abziehen und Weitergeben weiterer Karten (S708, S710).

8. Verfahren nach Anspruch 7, bei dem basierend auf den Informationen aus der Datenbank (DB) ein Träger (130) erzeugt wird und anschließend die Karte (A) und die gegebenenfalls weiteren Karten (B-D) mit dem Träger (130) verbunden werden.

9. Verfahren nach Anspruch 7, bei dem die Karte in der nachfolgenden Verarbeitung mit einem Träger (106, 108a, 108b, 110a, 110b, 110c) verbunden wird, der der nachfolgenden Verarbeitung bereitgestellt wird und Informationen (ID) trägt, die den Kartentyp der Karte (A-D) anzeigen, die mit dem Träger zu verbinden ist, wobei das Verfahren ferner den Schritt des Lesens der Informationen von dem Träger (106, 108a, 108b, 110a, 110b, 110c) umfasst.

10. Verfahren nach einem der Ansprüche 1 bis 9, bei dem in jedem der Mehrzahl der Kartenmagazine (M₁-M₄) Karten, die einer ersten Gruppe (I) zugeordnet sind, und Karten, die einer zweiten Gruppe (II) zugeordnet sind, angeordnet sind, wobei die Gruppen (I, II) in jedem Kartenmagazin (M₁-M₄) durch eine Trennkarte getrennt sind, wobei die Schritte (a) und (b) für die erste Gruppe (I) wiederholt werden, bis alle Trennkarten zwischen den Karten der ersten Gruppe (I) und der zweiten Gruppe (II) erkannt wurden.

11. Vorrichtung (100) zum Bereitstellen von Karten (A-D) für eine Verarbeitung, mit
einer Mehrzahl von Kartenmagazinen (M₁-M₄) zur Aufnahme von Karten (A-D), wobei den Karten (A-D) Informationen betreffend den Kartentyp zugeordnet sind;
einer Abzugseinrichtung zum Abziehen einer Karte (A-D) aus zumindest einem Kartenmagazin (M₁-M₄);
einem Ausgang zum Ausgeben der Karte (A-D) zusammen mit den der Karte (A-D) zugeordneten Informationen betreffend den Kartentyp;
einem Dateneingang (114) zum Empfangen von Informationen, die den Kartentyp der abzuziehenden Karten (A-D) angeben;
einem dem Ausgang nachgeschalteten Applizierer (104); und
einem Anleger (118) zum Bereitstellen eines Trägers (106, 108a, 108b, 110a, 110b, 110c) für die Karte (A-D),
wobei in einem Kartenmagazin (M₁-M₄) Karten (A-D) eines bekannten Kartentyps angeordnet sind und die Informationen betreffend den Kartentyp dem Kartenmagazin (M₁-M₄) zugeordnet sind, wobei bei einem Abzug einer Karte (A-D) aus einem Kartenmagazin (M₁-M₄) die dem Kartenmagazin (M₁-M₄) zugeordneten Informationen an dem Ausgang anliegen, und
wobei die am Dateneingang empfangbaren Informationen ferner eine Anzahl der bereitzustellenden Karten (A-D) umfasst,
**dadurch gekennzeichnet, dass**
der Applizierer (104) konfiguriert ist, um die Karte mit einem Träger (106, 108a, 108b, 110a, 110b, 110c) zu verbinden, wobei der Träger (106, 108a, 108b, 110a, 110b, 110c) eine Trägeridentifikation (ID) trägt, die Informationen über den Kartentyp der Karte (A-D) enthält, die mit dem Träger zu verbinden ist, und
der Anleger konfiguriert ist, um die Trägeridentifikation (ID) vor dem Abziehen der Karte (A-D) von dem Träger (106, 108a, 108b, 110a, 110b, 110c) zu lesen.

12. Vorrichtung nach Anspruch 11, bei der die Informationen betreffend den Kartentyp Informationen über das Kartenmaterial, eine Kartenprägung und/oder ein Speichermedium auf der Karte umfassen.

13. Vorrichtung nach Anspruch 12, bei der die Informationen betreffend den Kartentyp Informationen über ein Speichermedium auf der Karte umfassen, die das Vorhandensein eines Speichermediums und den Speichermediumtyp anzeigen, so dass bei der nachfolgenden Verarbeitung abhängig von dem angezeigten Speichermediumtyp eine geeignete Kartenleseeinrichtung aktivierbar ist.

14. Vorrichtung nach einem der Ansprüche 11 bis 13, bei der die Abzugseinrichtung konfiguriert ist, um die Karten (A-D) sequentiell aus den Kartenmagazinen (M₁-M₄) abzuziehen.

15. Vorrichtung nach einem der Ansprüche 11 bis 14, bei der in einer ersten Anzahl von Kartenmagazinen (M₁; M₁, M₂) Karten (A) eines ersten Kartentyps angeordnet sind und in einer zweiten Anzahl von Kartenmagazinen (M₂; M₃, M₄) Karten (B) eines zweiten Kartentyps angeordnet sind, wobei die Abzugseinrichtung konfiguriert ist, um eine Karte (A) aus zumindest einem Kartenmagazin der ersten Anzahl und eine Karte (B) aus zumindest einem Kartenmagazin der zweiten Anzahl parallel abzuziehen.

16. Vorrichtung nach einem der Ansprüche 11 bis 15, mit einer Leseeinrichtung (134) zum Lesen einer abgezogenen Karte und mit einer Verarbeitungseinrichtung (136), die konfiguriert ist, um basierend auf den von der Karte gelesenen Informationen auf eine Datenbank (DB) zuzugreifen, und um, basierend auf den Informationen aus der Datenbank, die Abzugseinrichtung und den Ausgang zum Abziehen und Weitergeben weiterer Karten anzusteuern.

17. Vorrichtung nach einem der Ansprüche 11 bis 16, bei der in jedem der Mehrzahl der Kartenmagazine (M₁-M₄) Karten, die einer ersten Gruppe (I) zugeordnet sind, und Karten, die einer zweiten Gruppe (II) zugeordnet sind, angeordnet sind, wobei die Gruppen in jedem Kartenmagazin durch eine Trennkarte getrennt sind, wobei eine Trennkartenerfassungseinrichtung vorgesehen ist, und wobei die Abzugseinrichtung und der Ausgang konfiguriert sind, um die Karten der ersten Gruppe abzuziehen und auszugeben bis alle Trennkarten zwischen den Karten der ersten Gruppe (I) und der zweiten Gruppe (II) durch die Trennkartenerfassungseinrichtung erkannt sind.

## Claims

1. Method for providing cards (A, B, C, D) for processing, wherein the cards (A, B, C, D) are arranged in a plurality of card magazines (M₁, M₂, M₃, M₄) and may be drawn from the plurality of card magazines (M₁ to M₄), wherein information regarding the card type is associated with the cards (A - D), the method comprising:
(a) receiving (S600) information specifying the card type of the card (A - D) to be drawn,
(b) drawing (S604) a card (A - D) from at least one card magazine (M₁ to M₄); and
(c) outputting the card (A - D) for subsequent processing together with the information regarding the card type associated with the card (A - D) to allow control of the subsequent processing based on the forwarded information,
wherein cards (A - D) of a known card type are arranged in a card magazine (M₁ - M₄), and the information regarding the card type is associated with the card magazine (M₁ - M₄), wherein the information associated with the card magazine (M₁ - M₄) is forwarded in step (b) when drawing a card (A - D) from a card magazine (M₁ - M₄) in step (a),
**characterized in that**
in subsequent processing, the card is connected to a carrier (106, 108a, 108b, 110a, 110b, 110c) carrying a carrier identification (ID) which is read from the carrier (106, 108a, 108b, 110a, 110b, 110c) before drawing the card (A-D) and contains information on the card type of the card (A - D) to be connected to the carrier.

2. Method according to claim 1, wherein information regarding the card type includes information on the card material, a card embossing and/or a storage medium on the card.

3. Method according to claim 2, wherein the information regarding the card type includes information on a storage medium on the card indicating the presence of a storage medium and the storage medium type so that, in subsequent processing, a suitable card reader may be activated depending on the indicated storage medium type.

4. Method according to one of claims 1 to 3, wherein the steps (a) and (b) are performed sequentially for the card magazines (M₁ - M₄) .

5. Method according to one of claims 1 to 4, wherein cards (A) of a first card type are arranged in a first number of card magazines (M₁; M₁, M₂), and cards of a second card type (B) are arranged in a second number of card magazines (M₂; M₂, M₄), wherein, in step (a), a card (A) from at least one card magazine of the first number and a card (B) from at least one card magazine of the second number are drawn in parallel.

6. Method according to one of claims 1 to 5, wherein the information further includes a number of the cards (A-D) to be provided.

7. Method according to any of claims 1 to 6, wherein a card drawn in step (a) is read (S702) prior to step (b), wherein the method further comprises:
based on the information read from the card (A - D), accessing (S704) a database (DB); and
based on the information from the database (DB), drawing and forwarding further cards (S708, S710).

8. Method according to claim 7, wherein a carrier (130) is generated based on the information from the database (DB), and subsequently the card (A) and the further cards (B - D), if any, are connected to the carrier (130).

9. Method according to claim 7, wherein, in subsequent processing, the card is connected to a carrier (106, 108a, 108b, 110a, 110b, 110c) provided to the subsequent processing and carrying information (ID) indicating the card type of the card (A - D) to be connected to the carrier, wherein the method further includes the step of reading the information from the carrier (106, 108a, 108b, 110a, 110b, 110c).

10. Method according to one of claims 1 to 9, wherein cards associated with a first group (I) and cards associated with a second group (II) are arranged in each of the plurality of card magazines (M₁ - M₄), wherein the groups (I, II) in each card magazine (M₁ - M₄) are separated by a separation card, wherein the steps (a) and (b) are repeated for the first group (I) until all separation cards between the cards of the first group (I) and the second group (II) have been detected.

11. Device (100) for providing cards (A - D) for processing, having
a plurality of card magazines (M₁ - M₄) for receiving cards (A - D), wherein information regarding the card type is associated with the cards (A - D);
drawing means for drawing a card (A - D) from at least one card magazine (M₁ - M₄);
an output for outputting the card (A - D) together with the information regarding the card type associated with the card (A - D);
a data input (114) for receiving information specifying the card type of the card (A - D) to be drawn;
an applier (104) downstream of the output; and
a feeder (118) for providing a carrier (106, 108a, 108b, 110a, 110b, 110c) for the card (A - D),
wherein cards (A - D) of a known card type are arranged in a card magazine (M₁ - M₄) and the information regarding the card type is associated with the card magazine (M₁ - M₄), wherein the information associated with the card magazine (M₁ - M₄) is applied to the output when drawing a card (A - D) from a card magazine (M₁ - M₄), and
wherein the information receivable at the data input further includes a number of the cards to be provided (A - D),
**characterized in that**
the applier (104) is configured to connect the card to a carrier (106, 108a, 108b, 110a, 110b, 110c), the carrier (106, 108a, 108b, 110a, 110b, 110c) carrying a carrier identification (ID) which contains information on the card type of the card (A - D) to be connected to the carrier, and
the feeder is configured to read the carrier identification (ID) from the carrier (106, 108a, 108b, 110a, 110b, 110c) before drawing the card (A-D).

12. Device according to claim 11, wherein the information regarding the card type includes information on the card material, a card embossing and/or a storage medium on the card.

13. Device according to claim 12, wherein the information regarding the card type includes information on a storage medium on the card indicating the presence of a storage medium and the storage medium type so that, in subsequent processing, a suitable card reader may be activated depending on the indicated storage medium type.

14. Device according to one of claims 11 to 13, wherein the drawling means is configured to draw the cards (A - D) sequentially from the card magazines (M₁ - M₄).

15. Device according to one of claims 11 to 14, wherein cards (A) of a first card type are arranged in a first number of card magazines (M₁; M₁, M₂) and cards (B) of a second card type are arranged in a second number of card magazines (M₂; M₃, M₄), wherein the drawing means is configured to draw a card (A) from at least one card magazine of the first number and a card (B) from at least one card magazine of the second number in parallel.

16. Device according to one of claims 11 to 15, having a reader (134) for reading a drawn card and having a processing means (136) configured to access a database (DB) based on the information read from the card, and to drive the drawing means and the output for drawing and forwarding further cards based on the information from the database.

17. Device according to one of claims 11 to 16, wherein cards associated with a first group (I) and cards associated with a second group (II) are arranged in each of the plurality of the card magazines (M₁ - M₄), wherein the groups in each card magazine are separated by a separation card, wherein a separation card detection means is provided and wherein the drawing means and the output are configured to draw and output the cards of the first group until all separation cards between the cards of the first group (I) and the second group (II) have been detected by the separation card detection means.

## Revendications

1. Procédé de production de cartes (A, B, C, D) pour un traitement, les cartes (A, B, C, D) étant disposées dans une pluralité de magasins à cartes (M₁, M₂, M₃, M₄) et pouvant être prélevées de la pluralité de magasins à cartes (M₁ à M₄), aux cartes (A-D) étant associées des informations relatives au type de carte, aux étapes suivantes consistant à:
(a) recevoir (S600) des informations qui indiquent le type de carte de la carte à prélever (A-D)
(b) prélever (S604) une carte (A-D) d'au moins un magasin à cartes (M₁ à M₄); et
(c) sortir la carte (A-D) pour le traitement suivant ensemble avec l'information relative au type de carte associée à la carte (A-D), pour permettre une commande du traitement suivant sur base des informations transmises,
dans un magasin à cartes (M₁-M₄) étant disposées des cartes (AD) d'un type de carte connu et les informations relatives au type de carte étant associées au magasin à cartes (M₁-M₄), les informations associées au magasin à cartes (M₁-M₄) étant, lors d'un prélèvement d'une carte (A-D) d'un magasin à cartes (M₁-M₄) à l'étape (a), transmises à l'étape (b),
**caractérisé par le fait que**
la carte étant assemblée, dans le traitement suivant, avec un support (106, 108a, 108b, 110a, 110b, 110c) qui porte une identification de support (ID) qui est lue du support (106, 108a, 108b, 110a, 110b, 110c) avant le prélèvement de la carte (A-D) et qui contient des informations sur le type de la carte (A-D) qui doit être assemblée avec le support.

2. Procédé selon la revendication 1, dans lequel les informations relatives au type de carte comportent des informations sur le matériau de carte, une impression de carte et/ou un support de mémoire sur la carte.

3. Procédé selon la revendication 2, dans lequel les informations relatives au type de carte comportent des informations sur un support de mémoire sur la carte qui indiquent la présence d'un support de mémoire et le type de support de mémoire, de sorte que, lors du traitement suivant, un moyen de lecture de carte approprié puisse être activé en fonction du type de support de mémoire indiqué.

4. Procédé selon l'une des revendications 1 à 3, dans lequel les étapes (a) et (b) sont réalisées en séquence pour les magasins à cartes (M₁-M₄).

5. Procédé selon l'une des revendications 1 à 4, dans lequel dans un premier nombre de magasins à cartes (M₁; M₁, tM₂) sont disposées des cartes (A) d'un premier type de carte et dans un deuxième nombre de magasins à cartes (M₂; M₂, M₄) sont disposées des cartes d'un deuxième type de carte (B), à l'étape (a) étant prélevées en parallèle une carte (A) d'au moins un magasin à cartes du premier nombre et une carte (B) d'au moins un magasin à cartes du deuxième nombre.

6. Procédé selon l'une des revendications 1 à 5, dans lequel les informations comportent par ailleurs un nombre de cartes à produire (A-D).

7. Procédé selon l'une des revendications 1 à 6, dans lequel une carte prélevée à l'étape (a) est lue (S702) avant l'étape (b), le procédé présentant par ailleurs les étapes suivantes:
sur base des informations lues de la carte (A-D), accéder (S704) à une banque de données (DB); et
sur base des informations de la banque de données (DB), prélever et transmettre d'autres cartes (S708, S710).

8. Procédé selon la revendication 7, dans lequel un support (130) est généré sur base des informations de la banque de données (DB), et ensuite la carte (A) et les éventuellement autres cartes (B-D) sont assemblées avec le support (130).

9. Procédé selon la revendication 7, dans lequel la carte est, dans le traitement suivant, assemblée avec un support (106, 108a, 108b, 110a, 110b, 110c) qui est mis à disposition pour le traitement suivant et qui porte des informations (ID) qui indiquent le type de la carte (A-D) qui doit être assemblé avec le support, le procédé comportant par ailleurs l'étape de lecture des informations du support (106, 108a, 108b, 110a, 110b, 110c).

10. Procédé selon l'une des revendications 1 à 9, dans lequel sont disposées, dans chacun de la pluralité de magasins à cartes (M₁-M₄), des cartes qui sont associées à un premier groupe (I), et des cartes qui sont associées à un deuxième groupe (II), les groupes (I, II) dans chaque magasin à cartes (M₁-M₄) étant séparés par une carte de séparation, les étapes (a) et (b) étant répétées pour le premier groupe (I) jusqu'à ce que toutes les cartes de séparation entre les cartes du premier groupe (I) et du deuxième groupe (II) aient été reconnues.

11. Dispositif (100) pour produire des cartes (A-D) pour un traitement, avec
une pluralité de magasins à cartes (M₁-M₄) destinés à recevoir des cartes (A-D), aux cartes (A-D) étant associées des informations relatives au type de carte;
un moyen de prélèvement destiné à prélever une carte (A-D) d'au moins un magasin à cartes (M₁-M₄);
une sortie destinée à sortir la carte (A-D) ensemble avec les informations relatives au type de carte associées à la carte (A-D);
une entrée de données (114) destinée à recevoir des informations qui indiquent le type des cartes à prélever (A-D);
un applicateur (104) connecté en aval de la sortie; et
un margeur (118) destiné à mettre à disposition un support (106, 108a, 108b, 110a, 110b, 110c) pour la carte (A-D),
dans un magasin à cartes (M₁-M₄) étant disposées des cartes (AD) d'un type de carte connu et les informations relatives au type de carte étant associées au magasin à cartes (M₁-M₄), lors d'un prélèvement d'une carte (A-D) d'un magasin à cartes (M₁-M₄) étant présentes à la sortie les informations associées au magasin à cartes (M₁-M₄), et
les informations pouvant être reçues à l'entrée de données comprenant par ailleurs un nombre de cartes à produire (A-D),
**caractérisé par le fait que**
l'applicateur (104) est configuré pour assembler la carte avec un support (106, 108a, 108b, 110a, 110b, 110c), le support (106, 108a, 108b, 110a, 110b, 110c) portant une identification de support (ID) qui contient des informations sur le type de la carte (A-D) qui doit être assemblée avec le support, et
le margeur est configuré pour lire l'identification de support (ID) du support (106, 108a, 108b, 110a, 110b, 110c) avant le prélèvement de la carte (A-D).

12. Dispositif selon la revendication 11, dans lequel les informations relatives au type de carte comprennent des informations sur le matériau de carte, une impression de carte et/ou un support de mémoire sur la carte.

13. Dispositif selon la revendication 12, dans lequel les informations relatives au type de carte comprennent des informations sur un support de mémoire sur la carte qui indiquent la présence d'un support de mémoire et le type de support de mémoire, de sorte que, lors du traitement suivant, un moyen de lecture de carte approprié puisse être activé en fonction du type de support de mémoire indiqué.

14. Dispositif selon l'une des revendications 11 à 13, dans lequel le moyen de prélèvement est configuré pour prélever les cartes (A-D) en séquence des magasins à cartes (M₁-M₄).

15. Dispositif selon l'une des revendications 11 à 14, dans lequel dans un premier nombre de magasins à cartes (M₁; M₁, tM₂) sont disposées des cartes (A) d'un premier type de carte et dans un deuxième nombre de magasins à cartes (M₂; M₃, M₄) sont disposées des cartes (B) d'un deuxième type de carte, le moyen de prélèvement est configuré pour prélever en parallèle une carte (A) d'au moins un magasin à cartes du premier nombre et une carte (B) d'au moins un magasin à cartes du deuxième nombre.

16. Dispositif selon l'une des revendications 11 à 15, avec un moyen de lecture (134) destiné à lire une carte prélevée et avec un moyen de traitement (136) qui est configuré pour accéder à une banque de données (DB) sur base des informations lues de la carte, et pour activer, sur base des informations de la banque de données, le moyen de prélèvement et la sortie pour prélever et transmettre d'autres cartes.

17. Dispositif selon l'une des revendications 11 à 16, dans lequel sont disposées, dans chacun de la pluralité de magasins à cartes (Mi-M₄), des cartes qui sont associées à un premier groupe (I), et des cartes qui sont associées à un deuxième groupe (II), les groupes dans chaque magasin à cartes étant séparés par une carte de séparation, un moyen de saisie de carte de séparation étant prévu et le moyen de prélèvement et la sortie étant configurés pour prélever et sortir les cartes du premier groupe jusqu'à ce que toutes les cartes de séparation entre les cartes du premier groupe (I) et du deuxième groupe (II) soient reconnues par le moyen de saisie de carte de séparation.
